# EUROPEAN PATENT APPLICATION

(11) **EP 4 819 666 A1**
(43) Date of publication of application: **07.10.2026**
(21) Application number: 23959918.6
(22) Date of filing: 30.11.2023
(51) Int. Cl.: H04W 24/02

(54) **METHOD AND APPARATUS FOR DETERMINING MEASUREMENT CONFIGURATION, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN); HE, Chuanfeng, Dongguan, Guangdong 523860 (CN)
(74) Representative: RGTH
(86) International application number: PCT/CN2023/135720
(87) International publication number: WO 2025/112007

(57) **Abstract**

The present application belongs to the technical field of communications. Disclosed are a method and apparatus for determining a measurement configuration, and a device and a medium. The method is executed by a terminal device, wherein the terminal device is provided with a first receiver and a second receiver, and the operating energy consumption of the first receiver is lower than the operating energy consumption of the second receiver. The method comprises: determining an RRM measurement configuration from a first measurement configuration set and/or a second measurement configuration set on the basis of configuration information and/or a triggering event, wherein the first measurement configuration set is used by a first receiver to execute RRM measurement, and the second measurement configuration set is used by a second receiver to execute RRM measurement.

## Description

### TECHNICAL FIELD

The present application relates to the field of communication technologies, and more particularly, to a method for determining a measurement configuration, an apparatus for determining a measurement configuration, devices, and a medium.

### BACKGROUND

To achieve power savings for a terminal device, a low-power first receiver can be introduced in the terminal device. If the low-power first receiver replaces a second receiver to perform radio resource management (RRM) measurement work, the power consumption required for the RRM measurement can be reduced.

However, the RRM measurement configuration adopted by a terminal device is not static. When factors such as an operating receiver, an operating bandwidth, and a measurement object change, the adopted RRM measurement configuration may also need to change.

Currently, there is no established technical solution for determining an appropriate RRM measurement configuration from among multiple RRM measurement configurations when two types of receivers are supported.

### SUMMARY

The present application provides a method for determining a measurement configuration, an apparatus for determining a measurement configuration, devices, and a medium. The technical solution at least includes the following.

According to an aspect of embodiments of the present application, a method for determining a measurement configuration is provided. The method is performed by a terminal device, where the terminal device has a first receiver and a second receiver, operating power consumption of the first receiver is lower than operating power consumption of the second receiver, and the method includes:
determining, in a first measurement configuration set and/or a second measurement configuration set, a radio resource management (RRM) measurement configuration according to configuration information and/or a triggering event,
where the first measurement configuration set is used for the first receiver to perform an RRM measurement, and the second measurement configuration set is used for the second receiver to perform the RRM measurement.

According to another aspect of the embodiments of the present application, a method for determining a measurement configuration is provided. The method is performed by a network device, and the method includes:
transmitting configuration information and/or triggering information,
where the triggering information is used to trigger a terminal device to determine an RRM measurement configuration, the terminal device has a first receiver and a second receiver, and operating power consumption of the first receiver is lower than operating power consumption of the second receiver.

According to another aspect of the embodiments of the present application, an apparatus for determining a measurement configuration is provided. The apparatus has a first receiver and a second receiver, operating power consumption of the first receiver is lower than operating power consumption of the second receiver, and the apparatus includes:
a processing module, configured to determine, in a first measurement configuration set and/or a second measurement configuration set, an RRM measurement configuration according to configuration information and/or a triggering event,
where the first measurement configuration set is used for the first receiver to perform an RRM measurement, and the second measurement configuration set is used for the second receiver to perform the RRM measurement.

According to another aspect of the embodiments of the present application, an apparatus for determining a measurement configuration is provided, and the apparatus includes:
a transmitting module, configured to transmit configuration information and/or triggering information,
where the triggering information is used to trigger a terminal device to determine an RRM measurement configuration, the terminal device has a first receiver and a second receiver, and operating power consumption of the first receiver is lower than operating power consumption of the second receiver.

According to another aspect of the embodiments of the present application, a terminal device is provided, and the terminal device includes:
a processor, a transceiver connected to the processor, and a memory configured to store executable instructions of the processor,
where the processor is configured to load and execute the executable instructions to implement the method for determining the measurement configuration as described in the various aspects above.

According to another aspect of the embodiments of the present application, a network device is provided, and the network device includes:
a processor, a transceiver connected to the processor, and a memory configured to store executable instructions of the processor,
where the processor is configured to load and execute the executable instructions to implement the method for determining the measurement configuration as described in the various aspects above.

According to another aspect of the embodiments of the present application, a chip is provided. The chip includes a programmable logic circuit and/or program instructions, and the chip is configured to implement, when running, the method for determining the measurement configuration as described in the various aspects above.

According to another aspect of the embodiments of the present application, a computer-readable storage medium is provided. The computer-readable storage medium has stored therein at least one program, and the at least one program is loaded and executed by a processor to implement the method for determining the measurement configuration as described in the various aspects above.

According to another aspect of an embodiment of the present application, a computer program product or a computer program is provided. The computer program product or computer program includes computer instructions, which are stored in a computer-readable storage medium. A processor obtains the computer instructions from the computer-readable storage medium, and the processor executes the computer instructions to implement the method for determining the measurement configuration as described in the various aspects above.

The technical solution provided in the embodiments of the present application may include the following beneficial effects:
it supports the terminal device, which includes a first receiver and a second receiver, in determining an RRM measurement configuration in a first measurement configuration set and/or a second measurement configuration set. It supports the terminal device in flexibly switching the RRM measurement configuration to ensure the reliability and efficiency of an RRM measurement. If the RRM measurement configuration is determined according to configuration information, the RRM measurement configuration adopted by the terminal device may conform to the expectation or capability of the current network side. If the RRM measurement configuration is determined according to a triggering event, the RRM measurement configuration adopted by the terminal device may conform to the communication environment within the current system and the power consumption situation of the terminal device itself.

### BRIEF DESCRIPTION OF THE DRAWINGS

To illustrate the technical solutions in the embodiments of the present application more clearly, the accompanying drawings required for describing the embodiments are briefly introduced below. It is apparent that the drawings in the following description are merely some embodiments of the present application, and a person of ordinary skill in the art can obtain other drawings according to these drawings without creative effort.
FIG. 1 illustrates a schematic diagram of a receiver system provided in an exemplary embodiment of the present application.
FIG. 2 illustrates a schematic diagram of an on-off keying modulation process provided in an exemplary embodiment of the present application.
FIG. 3 illustrates a schematic diagram of a multi-carrier on-off keying signal provided in an exemplary embodiment of the present application.
FIG. 4 illustrates a schematic diagram of a measurement timing configuration provided in an exemplary embodiment of the present application.
FIG. 5 illustrates a schematic diagram of a low mobility criterion provided in an exemplary embodiment of the present application.
FIG. 6 illustrates a schematic flowchart of a method for determining a measurement configuration provided in an exemplary embodiment of the present application.
FIG. 7 illustrates a schematic flowchart of a method for determining a measurement configuration provided in an exemplary embodiment of the present application.
FIG. 8 illustrates a schematic flowchart of a method for determining a measurement configuration provided in an exemplary embodiment of the present application.
FIG. 9 illustrates a schematic flowchart of a method for determining a measurement configuration provided in an exemplary embodiment of the present application.
FIG. 10 illustrates a structural block diagram of an apparatus for determining a measurement configuration provided in an exemplary embodiment of the present application.
FIG. 11 illustrates a structural block diagram of an apparatus for determining a measurement configuration provided in an exemplary embodiment of the present application.
FIG. 12 illustrates a schematic structural diagram of a network device provided in an exemplary embodiment of the present application.
FIG. 13 illustrates a schematic structural diagram of a terminal device provided in an exemplary embodiment of the present application.

### DETAILED DESCRIPTION

To make the objectives, technical solutions, and advantages of the present application clearer, the embodiments of the present application will be described in further detail below with reference to the accompanying drawings. The exemplary embodiments will be described in detail herein, with examples thereof illustrated in the accompanying drawings. When the following description refers to the accompanying drawings, unless otherwise indicated, the same numbers in different drawings denote the same or similar elements. The implementations described in the following exemplary embodiments do not represent all implementations consistent with the present application. Instead, they are merely examples of apparatuses and methods consistent with some aspects of the present application as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and includes any and all possible combinations of one or more of the associated listed items.

It should be understood that although the terms first, second, third, etc., may be used in the present disclosure to describe various information, such information should not be limited to these terms. These terms are only used to distinguish information of the same type from each other. For example, without departing from the scope of the present disclosure, first information may also be referred to as second information, and similarly, second information may also be referred to as first information. Depending on the context, the word "if" as used herein may be interpreted as "when" or "upon" or "in response to determining".

The technical solutions provided in the embodiments of the present application may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolution system of the NR system, an LTE-based access to unlicensed spectrum (LTE-U) system, an NR-based access to unlicensed spectrum (NR-U) system, a terrestrial networks (TN) system, a non-terrestrial networks (NTN) system, wireless local area networks (WLAN), wireless fidelity (Wi-Fi), a cellular internet of things system, a cellular passive internet of things system, an ambient power enabled internet of things (Ambient IoT/A-IoT) system, or a zero-power internet of things system. It may also be applicable to subsequent evolution systems of the 5G NR system, and may also be applicable to beyond fifth generation (B5G), 6th generation (6G), and subsequent evolution systems. In some embodiments of the present application, "NR" may also be referred to as a 5G NR system or a 5G system. The 5G mobile communication system may include non-standalone (NSA) and/or standalone (SA).

The technical solutions provided in the embodiments of the present application can also be applied to machine type communication (MTC), long term evolution-machine (LTE-M), device to device (D2D) network, machine to machine (M2M) network, internet of things (IoT) network, or other networks. The IoT network may, for example, include the internet of vehicles. The communication manner in an internet of vehicles system is generally referred to as vehicle to X (V2X), where X may represent anything. For example, V2X may include vehicle to vehicle (V2V) communication, vehicle to infrastructure (V2I) communication, vehicle to pedestrian (V2P) communication, or vehicle to network (V2N) communication.

The network device in the present application provides wireless communication functions, and the network device includes but is not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP), or a transmission and reception point (TRP), etc. It may also be a next generation node B (gNB) or a transmission point (TRP or TP) in a 5th generation (5G) mobile communication system, or an antenna panel or a group of antenna panels (including multiple antenna panels) of a base station in a 5G system, or a network node constituting a gNB or a transmission point, such as a BBU or a distributed unit (DU), etc. Alternatively, it may be a base station in a B5G mobile communication system, a base station in a 6G mobile communication system, or a core network (CN), fronthaul, backhaul, a radio access network (RAN), a network slice, etc., or a reader in a radio frequency identification (RFID) system.

The terminal device in the present application may also be referred to as user equipment (UE), an access terminal, a user unit, a user station, a mobile station, a mobile platform, a remote station, a remote terminal, a mobile device, a user terminal, a terminal, a wireless communication device, a user agent, or a user apparatus, etc. The terminal includes but is not limited to: a handheld device, a wearable device, an in-vehicle device, and an internet of things device, such as: an electronic tag, a controller, a mobile phone, a tablet computer, an e-book reader, a laptop computer, a desktop computer, a television, a game console, a mobile Internet device (MID), an augmented reality (AR) terminal, a virtual reality (VR) terminal, and a mixed reality (MR) terminal, a wearable device, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set-top box (STB), and a customer premise equipment (CPE), etc.

In some embodiments, a network device and a terminal device communicate with each other via an air interface technology, such as a Uu interface.

It should be understood that in the description of the embodiments of the present application, the term "correspond/corresponding/correspondence" may mean that there is a direct correspondence or an indirect correspondence between two elements, or may mean that there is an association relationship between the two elements, or may mean a relationship such as indicating and being indicated, or configuring and being configured.

In the embodiments of the present application, "predefined" may be implemented by pre-storing corresponding codes, tables, or other means that can indicate relevant information in devices (e.g., including terminal devices and network devices). The present application does not limit the specific implementation method. For example, predefined may refer to what is defined in the protocol.

In the embodiments of the present application, the "protocol" may refer to standard protocols in the field of communications, such as an LTE protocol, an NR protocol, and related protocols applied in future communication systems, which are not limited in the present application.

### Next, a receiver system is introduced:

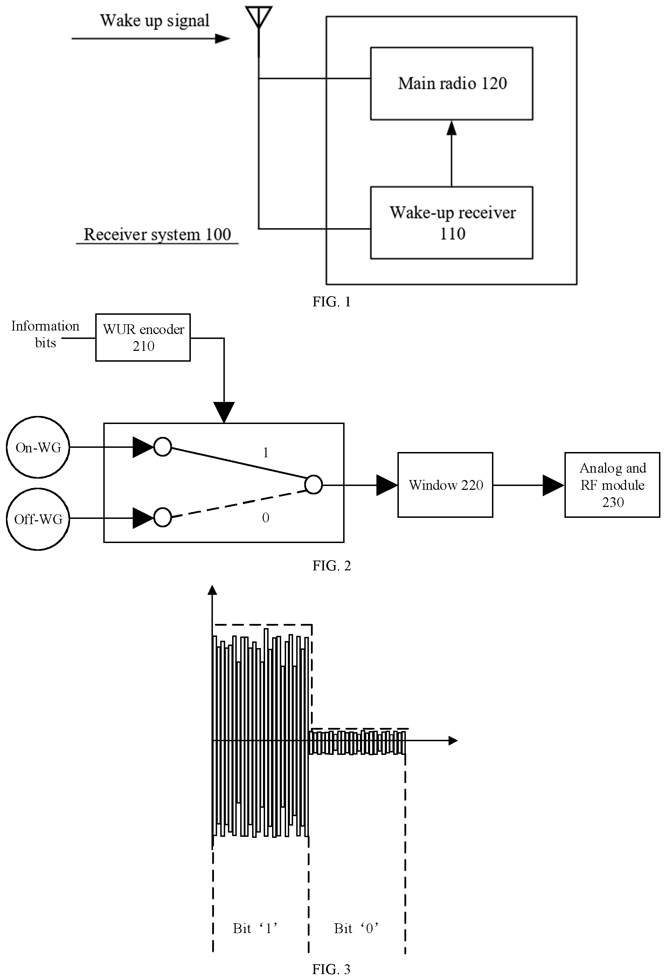

FIG. 1 illustrates a schematic diagram of a receiver system 100 provided by the related art. The receiver system 100 includes a wake-up receiver (WUR) 110 and a main radio 120.

In some embodiments, the main radio 120 may be understood as a main transceiver or a main air interface communication unit.

To further save power, a WUR is introduced to receive a wake up signal. The wake-up receiver is characterized by extremely low cost, extremely low complexity, and extremely low power consumption, and the wake-up receiver mainly receives the wake up signal based on envelope detection. Therefore, the wake up signal (WUS) received by the wake-up receiver differs in modulation manner, waveform, etc., from signals carried on a physical downlink control channel (PDCCH) as defined in relevant standards. The wake up signal is mainly an envelope signal modulated by applying amplitude shift keying (ASK) to a carrier signal. The demodulation of the envelope signal may also be accomplished by driving a low-power circuit with power provided by the radio frequency signal, and therefore it may be passive. The wake-up receiver may also be actively powered by the terminal device. Regardless of the power supply manner, the receiver significantly reduces power consumption compared to a conventional receiver. For example, a WUR may achieve a power consumption of less than 1 milliwatt, which is much lower than the tens to hundreds of milliwatts consumed by the main radio. The wake-up receiver may be integrated with the terminal device as an additional module of the receiver of the terminal device, or may serve independently as a wake-up functional module of the terminal device.

As illustrated in FIG. 1, in an initial state, the wake-up receiver 110 is in a wake-up state, and the main radio 120 is in an off state. The wake-up receiver 110 receives a wake up signal and determines whether to wake up the main radio 120 according to an indication of the wake up signal. If the main radio 120 needs to be woken up, a network device may transmit a wake up signal to the wake-up receiver 110, and the wake-up receiver 110 wakes up the main radio 120 upon receiving the wake up signal. Otherwise, the main radio 120 remains in the off state.

In some embodiments, when a wake up signal is transmitted, the wake up signal is used to indicate to wake up; when a wake up signal is not transmitted, the wake up signal is used to indicate not to wake up.

In some embodiments, when a wake up signal carrying a wake-up indication is transmitted, the wake up signal is used to indicate to wake up; when a wake up signal carrying a non-wake-up indication is transmitted, the wake up signal is used to indicate not to wake up.

### Next, on-off keying (OOK) modulation is introduced:

The signal received by the wake-up receiver 110 may be referred to as a WUR signal. The WUR signal uses a relatively simple modulation method to meet the reception requirements of the wake-up receiver 110 which has extremely low power consumption and extremely low complexity. A WUS is a type of the WUR signal. The generation method of the WUR signal adopts OOK modulation. The principle of the OOK modulation is to modulate the amplitude of a carrier signal to a non-zero value and a zero value, corresponding to "On" and "Off" respectively, to represent information bits. OOK is also known as 2 amplitude shift keying (2ASK).

FIG. 2 illustrates a schematic diagram of an OOK modulation process provided in the related art. A WUR encoder 210 converts information bits into corresponding on-waveform generation (On-WG) signals and off-waveform generation (Off-WG) signals. The On-WG signal represents "1", and the Off-WG signal represents "0". A window 220 is used to control duration of the On-WG signal and duration of the Off-WG signal to transmit each bit within the appropriate time. In an analog and radio frequency module 230, the On-WG signal and the Off-WG signal are converted into analog signals and radio frequency modulation is performed.

The aforementioned OOK signal is generated through multi-carrier (MC), and is thus referred to as a multi-carrier on-off keying (MC-OOK) signal. The generation of the MC-OOK signal may adopt multi-carrier modulation, for example, orthogonal frequency division multiplexing (OFDM) modulation, which may maintain good compatibility with related OFDM systems.

FIG. 3 illustrates a schematic diagram of an MC-OOK signal provided in the related art. By mapping corresponding amplitude values to multiple subcarriers in the frequency domain, the waveform of the time domain signal obtained through an inverse discrete fourier transform (IDFT) approximates the waveform formed by ASK modulation, where bit '1' is represented by a high level of the signal, and bit '0' is represented by a low level of the signal.

### Next, radio resource management (RRM) measurement is introduced:

For a wireless communication system, accurate measurement of cell quality and beam quality is the basis for effective implementation of radio resource management and mobility management. For 5G NR, the main signals used as measurement reference signals are the synchronization signal block (SSB) and the channel state information reference signal (CSI-RS).

The SSB measurement timing configuration (SMTC) is the time domain resource configuration information of SSB measurement. It is mainly used to configure a set of measurement windows (SMTC windows) based on the SSB measurement. Parameters such as the size, position, and periodicity of the SMTC window may be adjusted through configuration parameters.

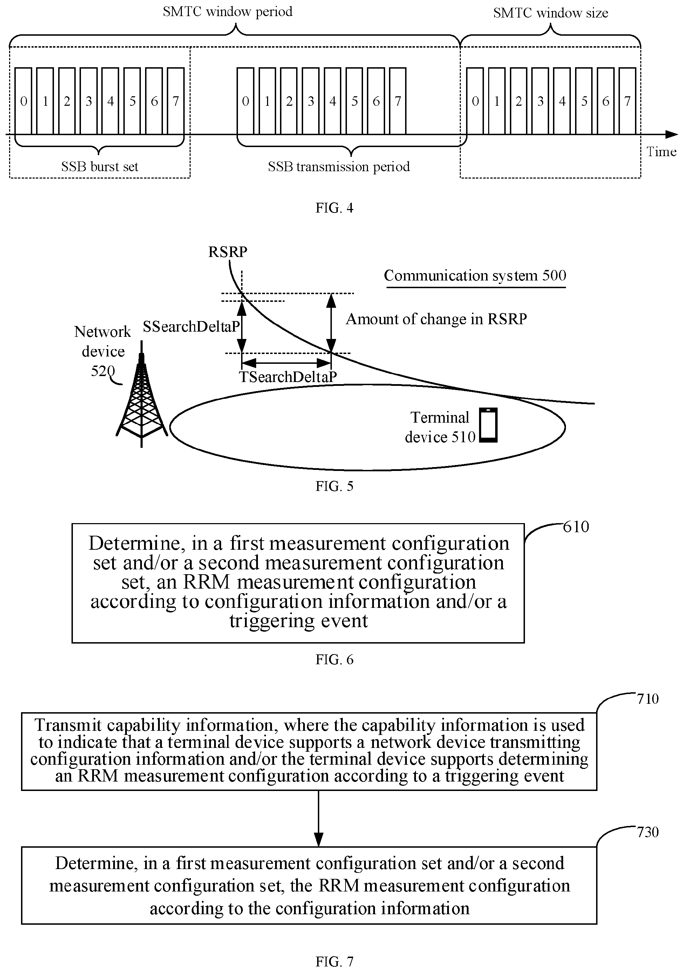

FIG. 4 illustrates a schematic diagram of an SMTC provided in the related art. Exemplarily, the SSB set in each SMTC window includes 8 SSBs, for example, an SSB burst set includes 8 SSBs numbered from 0 to 7. The size of each SMTC window is 5 milliseconds, an SMTC window period between a first SMTC window and a second SMTC window is 40 milliseconds, and a SSB transmission period is 20 milliseconds.

When a terminal device performs measurements, each frequency corresponds to a respective set of SMTC configurations used to indicate the available measurement window information on the frequency. However, this restriction is gradually being relaxed. To match different SSB periods corresponding to different cells, it is allowed to configure two sets of SMTC configurations for intra-frequency measurement in connected state to specify cell measurements. For example, in addition to the basic SMTC configuration, a set of relatively denser measurement windows can be configured for use by the serving cell and the cells indicated in the specified cell list. Measurements in idle state have also expanded the maximum number of SMTC configurations per frequency to two, to further meet the flexibility of network operation.

Higher-layer signaling may indicate specific configuration information of the specific measurement reference signal through the reference signal configuration (ReferenceSignalConfig) parameter. For the measurement based on SSB, the SSB to be measured indication (SSB-ToMeasure) uses a bitmap to indicate position information of the actually transmitted SSBs within an SSB burst set. Through the SSB to be measured indication, the terminal device may know at which SSB candidate positions SSBs are actually transmitted and at which SSB candidate positions SSBs are not transmitted. The terminal device does not need to perform measurement at SSB candidate positions where no SSB is transmitted, thereby achieving power saving of the terminal device.

For the measurement based on CSI-RS, a network device may configure one or more CSI-RS resources for the terminal device to perform measurement via higher-layer signaling. On a per-cell basis, higher-layer signaling may provide cell-level CSI-RS configuration parameters, such as a cell IDentification (ID), a measurement bandwidth of the cell, resource density and other information. Furthermore, since multiple CSI-RS resources may be configured for each cell, the parameter configuration further provides configuration information for each CSI-RS resource level, such as a specified CSI-RS index, time domain position information occupied by the CSI-RS resource and frequency domain position information occupied by the CSI-RS resource, and the sequence generation manner, etc.

### Next, mobility management of a terminal device is introduced:

The mobility management of the terminal device in an NR system includes: an RRC idle state (RRC_IDLE) or an RRC inactive state (RRC_INACTIVE) mobility management, and an RRC connected state (RRC_CONNECTED) mobility management. Here, the RRC connected state or RRC inactive state mobility management includes the processes of cell selection and reselection, while the RRC connected state mobility management includes the handover process of RRC connected state.

### 1. RRC idle state (RRC_IDLE) or RRC inactive state (RRC_INACTIVE) mobility management:

For a terminal device in RRC idle state or RRC inactive state, the prerequisite for being able to camp on a cell is that the signal quality of the cell meets the cell selection S criterion, that is the signal reception power corresponding to the cell Sᵣₓₗₑᵥ > 0 dB and the received signal quality corresponding to the cell S_{qual} > 0 dB. The signal quality of the cell includes measurement results of reference signal received power (RSRP) and reference signal received quality (RSRQ). After selecting a suitable cell, the terminal device continuously performs cell reselection evaluation. The measurements to be performed for evaluating cell reselection are categorized and conducted according to the reselection priority of each frequency, specifically including: (1) for the high-priority frequency, neighbor cell measurement is always performed; (2) for the intra-frequency frequency, when both the RSRP value and the RSRQ value of the serving cell are higher than an intra-frequency measurement threshold configured by the network device, the terminal device may stop intra-frequency neighbor cell measurement; otherwise, the intra-frequency neighbor cell measurement needs to be performed; and (3) for the equal-priority frequency and low-priority frequency, when both the RSRP value and the RSRQ value of the serving cell are higher than the inter-frequency measurement threshold configured by the network device, the terminal device may stop neighbor cell measurement on the equal-priority frequency and low-priority frequency; otherwise, the neighbor cell measurement on the equal-priority frequency and low-priority frequency needs to be performed.

After acquiring multiple candidate cells through measurements, the process of determining the target cell of cell reselection is similar to that in the LTE system, adopting the principle of prioritizing cell reselection to cells on the high-priority frequency. This specifically includes: (1) for cell reselection on the high-priority frequency, it is required that its signal quality is above a certain threshold and lasts for a specified duration, and the terminal device has camped on the source cell for no less than 1 second; (2) for cell reselection on the intra-frequency or equal-priority frequency, the R criterion (ranking by RSRP) needs to be met, the signal quality of the new cell is better than that of the current cell and lasts for a specified duration, and the terminal device has camped on the source cell for no less than 1 second; (3) for cell reselection on the low-priority frequency, it is required that no cell on the high-priority frequency or equal-priority frequency meets the requirement, the signal quality of the source cell is below a certain threshold, the signal quality of cells on the low-priority frequency is above a certain threshold and lasts for a specified duration, and the terminal device has camped on the source cell for no less than 1 second.

In the cell reselection process on the intra-frequency frequency and equal-priority frequency, when multiple candidate cells all meet the requirements, the LTE system selects the best cell as the target cell for reselection through RSRP ranking. Since terminal devices in the NR system access cells via beams, in order to increase the probability of a terminal device successfully accessing through a good beam during the access process, it is necessary to consider both the cell signal quality and the number of good beams when determining the target cell. To achieve this goal, before selecting a target cell, the NR system first selects multiple best cells with similar signal quality, and then selects a cell with the largest number of good beams as the target cell.

### 2. RRC connected state (RRC_CONNECTED) mobility management:

The mobility management of a terminal device in RRC connected state is mainly implemented through a network-controlled handover process. The NR system inherits the handover procedure of the LTE system, which mainly includes three phases: handover preparation, handover execution, and handover completion.

Taking as an example a scenario where the network device is a base station and the terminal device is user equipment (UE), during the handover preparation phase, after receiving a measurement report transmitted by the UE, the source base station makes a handover decision and initiates a handover request to the target base station. If the target cell accepts the handover request, the target cell transmits a handover response message to the source base station via the inter-base station interface. The handover response message contains the configuration information of the target cell, that is, a handover command.

During the handover execution phase, the source base station transmits the handover command to the UE. Upon receiving the handover command, the UE disconnects from the source cell, and begins to establish downlink synchronization with the target cell. It then initiates a random access process to the target cell using the random access resources configured in the handover command, and reports a handover completion message upon the completion of the random access. During the UE's process of accessing the target cell, the source base station forwards data packets received from the user plane function (UPF) to the target base station, and transmits status information regarding the transmission and reception of uplink and downlink data packets in the source cell prior to the forwarding to the target base station.

During the handover completion phase, the target base station transmits a path switch request to an access and mobility management function (AMF), requesting the AMF to switch the data packet transmission path from the UPF to the access network to the target base station. Once the AMF responds to the request, it indicates that the path switch is successful, and the target base station may indicate the source base station to release the context information of the UE. At this point, the entire UE connection has been switched to be within the target cell.

### Next, an RRM measurement relaxation mechanism is introduced:

A terminal device in a non-connected state needs to perform the RRM measurement on the serving cell and other neighbor cells based on the configuration of the network device to support mobility operations, such as cell reselection. For the purpose of power saving of the terminal device, when the channel quality of the terminal device in the serving cell is good, the terminal device may not initiate the RRM measurement for intra-frequency frequency and equal-priority or low-priority inter-frequency/inter-RAT frequency. Concurrently, the measurement interval for the RRM measurement on high-priority inter-frequency/inter-RAT frequency may be increased. This specifically includes: (1) when the RSRP of the terminal device on the serving cell is higher than SIntraSearchP, and the RSRQ of the terminal device on the serving cell is higher than SIntraSearchQ, the terminal device may not initiate the RRM measurement for intra-frequency neighbor cells; SIntraSearchP and SIntraSearchQ are threshold parameters configured by the network device. (2) when the RSRP of the terminal device on the serving cell is higher than SnonIntraSearchP, and the RSRQ of the terminal device on the serving cell is higher than SnonIntraSearchQ, the terminal device may not initiate the RRM measurement for neighbor cells on the equal-priority or low-priority inter-frequency/inter-RAT frequency; SnonIntraSearchP and SnonIntraSearchQ are threshold parameters configured by the network device. At the same time, for the high-priority inter-frequency/inter-RAT frequency, the terminal device may adopt the RRM measurement relaxation mechanism.

For the terminal device that needs to perform the RRM measurement on neighbor cells, the RRM measurement relaxation mechanism for neighbor cells is adopted to further meet the power saving requirements of the terminal device.

An RRM measurement relaxation criterion is introduced for the RRM measurement of the terminal device, including: a "terminal device is not at cell edge" criterion and a "low mobility" criterion. Both of these criteria are evaluated based on the "cell level" measurement results of the terminal device on the serving cell. These two criteria are introduced separately below.

### 1. "Terminal device is not at cell edge" criterion

For this criterion, the network device configures an RSRP threshold. When the RSRP of the terminal device on the serving cell is greater than the RSRP threshold, the terminal device is considered to meet the "terminal device is not at cell edge" criterion.

The network device may further configure an RSRP threshold and an RSRQ threshold. When the RSRP of the terminal device on the serving cell is greater than the RSRP threshold, and the RSRQ of the terminal device on the serving cell is greater than the RSRQ threshold, the terminal device is considered to meet the "terminal device is not at cell edge" criterion.

The RSRP threshold configured by the network device needs to be less than SIntraSearchP and SnonIntraSearchP. If the network device also configures an RSRQ threshold, the RSRQ threshold needs to be less than SIntraSearchQ and SnonIntraSearchQ.

### 2. "Low mobility" criterion

For this criterion, the network device configures evaluation duration of RSRP change TSearchDeltaP, and an RSRP change value threshold SSearchDeltaP. When the amount of change in RSRP of the terminal device on the serving cell within a period (TSearchDeltaP) is less than SSearchDeltaP, the terminal device is considered to meet the "low mobility" criterion.

Generally speaking, the power consumption of the RRM measurement may be saved through the RRM measurement relaxation mechanism. The RRM measurement relaxation mechanism may increase the time interval for performing RRM measurements on neighbor cells. However, the judgment condition for performing the RRM measurement relaxation is based on the measurement results of the serving cell, while the RRM measurement of the serving cell itself is not relaxed. Even if a WUS is introduced and the main receiver is triggered to turn on by receiving the WUS through the WUR, if the main receiver needs to be turned on periodically for the RRM measurement, the power saving effect brought by the introduction of the WUS will be greatly reduced, and the power saving gain cannot be realized.

Therefore, it may be considered to use the WUR to perform the RRM measurement instead of the main receiver. However, the RRM measurement configuration adopted for the RRM measurement is not invariable. The terminal device supporting the operation of both the WUR and the main receiver particularly faces this problem. If factors such as the operating receiver, operating bandwidth, and measurement object change, the terminal device may need to switch the RRM measurement configuration.

Performing the RRM measurement via the WUR may involve the WUR performing the RRM measurement using signals such as an SSB or a CSI-RS, which requires the wake-up receiver to have the capability to detect OFDM signals, imposing relatively high complexity requirements on the wake-up receiver. In contrast, a low power wake-up receiver (LP-WUR) with low power consumption and low complexity has advantages in power saving. The waveform of the signal the LP-WUR receives has low demodulation complexity, such as OOK or frequency shift keying (FSK) signal waveforms. The wake up signal received by the LP-WUR may also be referred to as a low power wake-up signal (LP-WUS). The synchronization signal received by the LP-WUR may also be referred to a low power synchronization signal (LP-SS), and the reference signal received by an LP-WUR may also be referred to as a low power reference signal (LP-RS). In the embodiments of the present application, LP-SS and/or LP-RS may be used for the RRM measurement. Exemplarily, the LP-WUR may perform the RRM measurement using the LP-SS, the LP-WUR may also perform the RRM measurement using the LP-SS, and the LP-WUR may further perform the RRM measurement using the SSB and/or the CSI-RS.

FIG. 5 illustrates a schematic diagram of a low mobility criterion provided in the related art. The criterion is applied in a communication system 500, and the communication system 500 includes a terminal device 510 and a network device 520.

The terminal device 510 in the present application may also be referred to as a UE, an access terminal, a user unit, a user station, a mobile station, a mobile platform, a remote station, a remote terminal, a mobile device, a user terminal, a terminal, a wireless communication device, a user agent, or a user apparatus. The terminal includes but is not limited to: a handheld device, a wearable device, an in-vehicle device, and an IoT device, such as: a mobile phone, a tablet computer, an e-book reader, a laptop computer, a desktop computer, a television, a game console, an MID, an AR terminal, a VR terminal, and an MR terminal, a wearable device, a controller, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, an SIP phone, a WLL station, a PDA, an STB, and a CPE, etc.

The network device 520 in the present application provides wireless communication functions, and the network device 520 includes but is not limited to: an eNB, an RNC, an NB, a BSC, a BTS, a home base station (e.g., a home evolved node B, or a HNB), a BBU, an AP in a Wi-Fi system, a wireless relay node, a wireless backhaul node, a TP, or a TRP, etc. It may also be a next gNB or a transmission point (TRP or TP) in a 5G mobile communication system, or one or a group of antenna panels (including multiple antenna panels) of a base station in a 5G system, or may also be a network node constituting a gNB or transmission point, such as a BBU or a DU. Alternatively, it may be a base station in a B5G mobile communication system and a 6G mobile communication system; or a CN, fronthaul, backhaul, an RAN, or a network slice; or a serving cell, a primary cell (PCell), a primary secondary cell (PSCell), a special cell (SpCell), a secondary cell (SCell), or a neighbor cell of a terminal device.

The terminal device 510 and the network device 520 communicate with each other through a certain air interface technology, such as a Uu interface.

Exemplarily, there are two communication scenarios exist between the terminal device 510 and the network device 520: an uplink communication scenario and a downlink communication scenario. The uplink communication refers to the terminal device 510 transmitting signals to the network device 520; and the downlink communication refers to the network device 520 transmitting signals to the terminal device 510.

The technical solutions provided in the embodiments of the present application may be applied to various communication systems, such as: a GSM system, a CDMA system, a WCDMA system, a GPRS, an LTE system, an LTE-A system, an LTE FDD system, an LTE TDD system, a UMTS, a WiMAX communication system, a 5G mobile communication system, an NR system, an evolution system of the NR system, an LTE-U system, an NR-U system, an NTN system, a non-NTN system, WLAN, Wi-Fi, a cellular internet of things system, and a cellular passive internet of things system. It may also be applicable to subsequent evolution systems of the 5G NR system, and may also be applicable to B5G, 6G, and subsequent evolution systems.

In some embodiments of the present application, "NR" may also be referred to as a 5G NR system or a 5G system. The 5G mobile communication system may include NSA and/or SA.

The technical solutions provided in the embodiments of the present application may also be applied to MTC, LTE-M, D2D network, M2M network, IoT network, or other networks. The IoT network, for example, may include the internet of vehicles. The communication manner in an internet of vehicles system is generally referred to as V2X, where X may represent anything. For example, V2X may include: V2V communication, V2I communication, V2P communication, or V2N communication, etc.

As illustrated in FIG. 5, within TSearchDeltaP, the amount of change in the RSRP of the terminal device 510 on the serving cell is greater than SSearchDeltaP, and it is considered that the terminal device 510 does not meet the "low mobility" criterion.

In related standards, by introducing a second SSearchDeltaP and a second TSearchDeltaP, further relaxation of measurements for low-mobility terminal devices (e.g., stationary terminal devices or quasi-stationary terminal devices) is supported. After completing cell selection/reselection, the terminal device needs to perform normal RRM measurement for at least a period of time (TSearchDeltaP).

For RRM measurements on the equal-priority or low-priority frequency, RRM measurement relaxation methods are defined for different RRM measurement relaxation criteria, specifically including: (1) when the terminal device meets the "low mobility" criterion, the terminal device uses a longer measurement interval when performing the RRM measurement on neighbor cells, and the measurement interval is increased by using a fixed scaling factor; (2) when the terminal device meets the "terminal device is not at cell edge" criterion, the terminal device uses a longer measurement interval when performing the RRM measurement on neighbor cells, and the measurement interval is increased by using a fixed scaling factor; and (3) when the terminal device meets both the "low mobility" criterion and the "terminal device is not at cell edge" criterion, the measurement intervals of the terminal device for intra-frequency, inter-frequency, and inter-RAT frequencies are all increased to 1 hour.

FIG. 6 illustrates a flowchart of a method for determining a measurement configuration provided in an exemplary embodiment of the present application. The method is performed by a terminal device and the method includes the following step.

**In step 610,** in a first measurement configuration set and/or a second measurement configuration set, an RRM measurement configuration is determined according to configuration information and/or a triggering event.

The terminal device that performs step 610 has a first receiver and a second receiver, where operating power consumption of the first receiver is lower than operating power consumption of the second receiver. The first measurement configuration set is used for the first receiver to perform an RRM measurement, and the second measurement configuration set is used for the second receiver to perform the RRM measurement. Since the operating power consumption of the first receiver is lower than the operating power consumption of the second receiver, the power consumption required for the first receiver to perform the RRM measurement using the first measurement configuration set is naturally lower than the power consumption required for the second receiver to perform the RRM measurement using the second measurement configuration set.

In some embodiments, the first receiver is an LP-WUR or a WUR, and the second receiver is a main receiver.

In some embodiments, the terminal device determines, in the first measurement configuration set and/or the second measurement configuration set, the RRM measurement configuration according to the received configuration information. Alternatively, the terminal device determines, in the first measurement configuration set and/or the second measurement configuration set, the RRM measurement configuration according to the triggering event. Alternatively, the terminal device determines, in the first measurement configuration set and/or the second measurement configuration set, the RRM measurement configuration according to the received configuration information and the triggering event.

In some embodiments, the configuration information is used to configure the RRM measurement configuration for the terminal device, and/or the configuration information is used to configure a receiver operating mode of the terminal device.

In some embodiments, the triggering event is related to at least one of: a switch of a bandwidth part (BWP), a bandwidth change of a wake up signal, a change of a measurement object, activation of a wake up signal, deactivation of a wake up signal, activation of a secondary cell, deactivation of a secondary cell, signal measurement result reaching a threshold, a hardware temperature of the UE reaching a threshold or an indication for reducing power consumption.

In summary, the method provided in the embodiments of the present application supports the terminal device, which includes the first receiver and the second receiver, in determining the RRM measurement configuration in the first measurement configuration set and/or the second measurement configuration set. Compared with performing the RRM measurement using the RRM measurement configuration in the second measurement configuration set, the power consumption required by the terminal device is significantly reduced when performing the RRM measurement using the RRM measurement configuration in the first measurement configuration set, which helps to achieve power saving of the terminal device.

Furthermore, the terminal device is supported to flexibly switch the RRM measurement configuration to ensure the reliability and efficiency of the RRM measurement. If the RRM measurement configuration is determined according to the configuration information, the RRM measurement configuration adopted by the terminal device may conform to the expectation or capability of the current network side. If the RRM measurement configuration is determined according to the triggering event, the RRM measurement configuration adopted by the terminal device may conform to the communication environment within the current system and the power consumption situation of the terminal device itself.

The first measurement configuration set and the second measurement configuration set involved in the present application are both configurations for the RRM measurement, with the difference lying in which receiver they are applicable to.

In some embodiments, the measurement configuration set includes at least one of: a measurement object (MO) configuration, a measurement gap (MG) configuration, a reporting configuration, a list of neighbor cells to be measured, measurement threshold information, a list of measurement identities, or a measurement quantity configuration.

The measurement object configuration includes at least one of: a configuration of a measurement signal, a configuration of a measurement frequency, or a measurement timing configuration.

In some embodiments, the configuration of the measurement signal includes at least one of:
- frequency domain configuration of the measurement signal: such as frequency domain location and bandwidth. The unit of the frequency domain bandwidth can be at least one of: MHz, KHz, or RB;
- time domain position of the measurement signal: similar to the SSB measurement timing configuration (SMTC), the measurement timing configuration of the measurement signal can be configured, including the period, offset, and duration of a measurement time window;
- measurement threshold of the measurement signal: the measurement threshold may include at least one of the following thresholds of the measurement signal: an RSRP threshold, an RSRQ threshold, a signal to interference plus noise ratio (SINR), a reference signal strength indicator (RSSI) threshold, or a power detection threshold;
- measurement offset of the measurement signal; or
- cell list corresponding to the measurement signal: a cell list for performing measurements based on the measurement signal, which facilitates the UE to use a corresponding receiver for the RRM measurement according to the support situation of RRM measurement signals in different cells. Specifically, for some cells, they may simultaneously support RRM measurements based on SSB/CSI-RS and RRM measurements based on LP-SS, or only support RRM measurements based on LP-SS, or only support RRM measurements based on SSB/CSI-RS; all of these may be implemented through measurement configurations. The cell list information includes physical cell identity (PCI) information.

In some embodiments, the measurement timing configuration may also be understood as a measurement time window configuration. Exemplarily, the measurement timing configuration includes SMTC. The SMTC is used to configure the time window for measuring the SSB. The SSB may be received according to the SMTC, and the signal quality of the serving cell and/or neighbor cells may be measured according to the received SSB to perform cell selection or reselection.

In some embodiments, the measurement gap configuration is used to configure at least one of the following items of information: a measurement gap period, a measurement gap length (MGL), a starting position of the measurement gap, or a measurement gap offset. The measurement gap period may also be referred to as a measurement gap repetition period (MGRP).

In some embodiments, a measurement configuration set may also indicate a measurement gap pattern configuration in an explicit or implicit manner. For example, in the explicit manner, the measurement configuration set includes a measurement gap pattern identity (MG Pattern ID). In the implicit manner, the measurement configuration set includes at least one of an MGRP or an MGL.

In some embodiments, the measurement threshold information is used to configure a measurement start threshold in the RRC connected state.

The first measurement configuration set refers to a measurement configuration set used by a first receiver to perform the RRM measurement, and the first measurement configuration set includes at least one of: a first measurement object configuration, a first MG configuration, a first reporting configuration, a first list of neighbor cells to be measured, first measurement threshold information, a first list of measurement identities, or a first measurement quantity configuration.

In some embodiments, the first measurement object configuration includes at least one of: a configuration of a first measurement signal, a configuration of a first measurement frequency, or a first measurement timing configuration.

Here, the configuration of the first measurement signal includes at least one of: a frequency domain configuration of the first measurement signal, a time domain position of the first measurement signal, a measurement threshold of the first measurement signal, a measurement offset of the first measurement signal, a cell list corresponding to the first measurement signal, beam information of the first measurement signal, transmission power of the first measurement signal, or a transmission period of the first measurement signal.

In some embodiments, the first measurement signal includes at least one of the following signals: an SSB, a CSI-RS, or an LP-SS.

In some embodiments, the modulation manner of the first measurement signal is one of: OOK modulation, phase shift keying (PSK) modulation, binary phase shift keying (BPSK) modulation, or FSK modulation.

The second measurement configuration set refers to a measurement configuration set used by a second receiver to perform the RRM measurement, and the second measurement configuration set includes at least one of: a second measurement object configuration, a second MG configuration, a second reporting configuration, a second list of neighbor cells to be measured, second measurement threshold information, a second list of measurement identities, or a second measurement quantity configuration.

In some embodiments, the second measurement object configuration includes at least one of: a configuration of a second measurement signal, a configuration of a second measurement frequency, or a second measurement timing configuration.

Here, the configuration of the second measurement signal includes at least one of: a frequency domain configuration of the second measurement signal, a time domain position of the second measurement signal, a measurement threshold of the second measurement signal, a measurement offset of the second measurement signal, a cell list corresponding to the second measurement signal, beam information of the second measurement signal, transmission power of the second measurement signal, or a transmission period of the second measurement signal.

In some embodiments, the second measurement signal includes at least one of the following signals: an SSB, a CSI-RS, or an LP-SS.

In some embodiments, the modulation manner of the second measurement signal is one of: OOK modulation, PSK modulation, BPSK modulation, or FSK modulation.

In some embodiments, the first measurement configuration set is completely different from the second measurement configuration set. Alternatively, the first measurement configuration set is partially the same as the second measurement configuration set. Exemplarily, the first MO configuration is different from the second MO configuration, the first MG configuration is different from the second MG configuration, and the first reporting configuration is different from the second reporting configuration, while the first list of neighbor cells to be measured is the same as the cell list corresponding to the second measurement signal, the first measurement threshold information is the same as the second measurement threshold information, the first list of measurement identities is the same as the second list of measurement identities, and the first measurement quantity configuration is the same as the second measurement quantity configuration.

In some embodiments, the measurement configuration set configures, for each measurement object, a threshold and a maximum number of beams N for acquiring cell signal quality, and the threshold and the N value are configured separately according to a reference signal type (RS type).

In some embodiments, the measurement configuration set configures, for each measurement object, a frequency of its associated SSB, subcarrier spacings (SCS) of the SSB, and a band indication of the SSB.

In some embodiments, the measurement configuration set configures, for each measurement object, a measurement period after Scell deactivation.

In some embodiments, the measurement configuration set configures, for each measurement object, SMTC1 and SMTC2. Optionally, two SMTCs are configured only for intra-frequency measurement, SMTC2 is configured with a corresponding cell list, the SMTC2 measurement window has a higher density, and the window of SMTC1 is a subset of SMTC. For inter-frequency measurement, only one SMTC is configured.

In some embodiments, the measurement configuration set configures filter coefficients. The filter coefficients are configured according to the measurement quantity (e.g., RSRP, RSRQ, SINR), the reference signal type, and whether the signal measurement is at the cell level or is a beam measurement. Two sets of filter coefficients may be configured. Each measurement object is associated with one of the two sets of filter coefficients.

In some embodiments, the measurement configuration set configures that an absolute radio frequency channel number (ARFCN) of the SSB points to the center position of the SSB, and the ARFCN of a CSI-RS points to the lowest subcarrier of physical resource block 0 (PRB 0).

In some embodiments, the measurement configuration set configures a per frequency offset for each measurement object, which may be a per quantity configuration or a per RS type configuration.

In some embodiments, the measurement configuration set configures a per-cell cell individual offset (CIO) for each measurement object.

In some embodiments, the measurement configuration set configures a whitelist and a blacklist for each measurement object.

In some embodiments, the measurement configuration set includes *ServingCellConfig*, in which servingCellMO is configured. Each servingCellMO is associated with one MeasObjectId to indicate the measurement of the serving cell.

After introducing possible designs of the first measurement configuration set and the second measurement configuration set, based on step 610, solutions for determining the RRM measurement configuration according to configuration information and determining the RRM measurement configuration according to a triggering event are further introduced.

In some embodiments, step 610 may be implemented as step 730, as illustrated in FIG. 7. Optionally, the method for determining the measurement configuration illustrated in FIG. 7 may further include step 710.

FIG. 7 illustrates a flowchart of a method for determining a measurement configuration provided in an exemplary embodiment of the present application. The method is performed by a terminal device and the method includes the following steps.

**In step 710,** capability information is transmitted, where the capability information is used to indicate that the terminal device supports a network device transmitting configuration information and/or that the terminal device supports determining an RRM measurement configuration according to a triggering event.

It may also be understood that, the capability information reported by the terminal device is used to indicate a first capability and/or a second capability, where the first capability indicates that the terminal device supports the network device transmitting the configuration information, and the second capability indicates that the terminal device supports determining the RRM measurement configuration according to the triggering event.

Here, the first capability may also be understood as the terminal device supporting a network device in indicating a switch of the RRM measurement configuration. The second capability may also be understood as the terminal device supporting autonomous determination of the RRM measurement configuration.

It should be noted that step 710 is an optional step. Furthermore, the network device may transmit the configuration information and/or triggering information with reference to the capability information, or may transmit the configuration information and/or triggering information without reference to the capability information. Exemplarily, even if the terminal device transmits the capability information, the network device may not consider the capability information reported by the terminal device when transmitting the configuration information and/or triggering the terminal device to determine the RRM measurement configuration.

In some embodiments, if the capability information transmitted by the terminal device is used to indicate the first capability, the network device transmits the configuration information to the terminal device, so that the terminal device may determine the RRM measurement configuration according to the configuration information.

In some embodiments, regardless of whether the terminal device reports the capability information or what type of the capability information is reported, as long as the network device transmits the configuration information to the terminal device, the terminal device determines the RRM measurement configuration according to the configuration information.

In some embodiments, if the capability information transmitted by the terminal device is used to indicate the second capability, the network device transmits triggering information to the terminal device, so that the terminal device may determine the RRM measurement configuration according to a first type of triggering event.

In some embodiments, if the capability information transmitted by the terminal device is used to indicate the second capability, the network device does not transmit the configuration information to the terminal device.

In some embodiments, regardless of whether the terminal device reports the capability information or what type of the capability information is reported, as long as the network device transmits the triggering information to the terminal device, the terminal device determines the RRM measurement configuration according to the triggering information.

In some embodiments, if the capability information transmitted by the terminal device is used to indicate the first capability and the second capability, the network device may transmit the configuration information and/or the triggering information. The terminal device may determine the RRM measurement configuration according to the configuration information, the terminal device may determine the RRM measurement configuration according to the triggering information, and the terminal device may determine the RRM measurement configuration according to the configuration information and the triggering information.

**In step 730,** in the first measurement configuration set and/or the second measurement configuration set, the RRM measurement configuration is determined according to the configuration information.

In some embodiments, the terminal device receives the configuration information.

In some embodiments, the configuration information is used to configure the RRM measurement configuration for the terminal device, and/or the configuration information is used to configure a receiver operating mode of the terminal device, and/or the configuration information is used to indicate that the network device supports transmitting a first measurement signal. Here, the first measurement signal is a measurement signal used by the first receiver to perform the RRM measurement.

In some embodiments, the configuration information is used to configure the first measurement configuration set for the terminal device, and the terminal device determines the RRM measurement configuration to be the first measurement configuration set. Optionally, the terminal device performs the RRM measurement according to the first measurement configuration set. Optionally, the terminal device performs the RRM measurement via the first receiver according to the first measurement configuration set. Optionally, the terminal device activates a Pre-MG related to a first measurement object according to the first measurement configuration set. Optionally, the terminal device deactivates a Pre-MG unrelated to the first measurement object according to the first measurement configuration set.

In some embodiments, in a case where the configuration information is used to configure the first measurement configuration set for the terminal device and the UE turns off the second receiver, the terminal device determines the RRM measurement configuration to be the first measurement configuration set.

In some embodiments, in a case where the configuration information is used to configure the first measurement configuration set for the terminal device and the UE turns on the first receiver, the terminal device determines the RRM measurement configuration to be the first measurement configuration set.

In some embodiments, in a case where the configuration information is used to configure the first measurement configuration set for the terminal device, the UE turns on the first receiver, and the UE turns off the second receiver, the terminal device determines the RRM measurement configuration to be the first measurement configuration set.

In some embodiments, when the first receiver performs the RRM measurement according to the first measurement configuration set, the measurement signal used is an SSB or a CSI-RS. This type of measurement signal has good compatibility but requires higher complexity for the first receiver. Alternatively, when the first receiver performs the RRM measurement according to the first measurement configuration set, the measurement signal used is an LP-SS. This type of measurement signal requires lower complexity for the first receiver, and the power consumption required for the first receiver to measure the LP-SS is lower, which helps the UE save power consumption.

In some embodiments, the configuration information is used to configure the second measurement configuration set for the terminal device, and the terminal device determines the RRM measurement configuration to be the second measurement configuration set. Optionally, the terminal device performs the RRM measurement according to the second measurement configuration set. Optionally, the terminal device performs the RRM measurement via the second receiver according to the second measurement configuration set. Optionally, the terminal device activates a Pre-MG related to a second measurement object according to the second measurement configuration set. Optionally, the terminal device deactivates a Pre-MG unrelated to the second measurement object according to the second measurement configuration set.

In some embodiments, in a case where the configuration information is used to configure the second measurement configuration set for the terminal device and the UE turns on the second receiver, the terminal device determines the RRM measurement configuration to be the second measurement configuration set.

In some embodiments, in a case where the configuration information is used to configure the second measurement configuration set for the terminal device and the UE turns off the first receiver, the terminal device determines the RRM measurement configuration to be the second measurement configuration set.

In some embodiments, in a case where the configuration information is used to configure the second measurement configuration set for the terminal device, the UE turns on the second receiver, and the UE turns off the first receiver, the terminal device determines the RRM measurement configuration to be the second measurement configuration set.

In some embodiments, the configuration information is used to configure the terminal device to operate using the first receiver, and the terminal device determines the RRM measurement configuration to be the first measurement configuration set. Alternatively, the configuration information is used to configure the terminal device to operate using the first receiver and to configure the first measurement configuration set, and the terminal device determines the RRM measurement configuration to be the first measurement configuration set. Optionally, the terminal device performs the RRM measurement according to the first measurement configuration set. Optionally, the terminal device performs the RRM measurement via the first receiver according to the first measurement configuration set. Optionally, the terminal device activates a Pre-MG related to the first measurement object according to the first measurement configuration set. Optionally, the terminal device deactivates a Pre-MG unrelated to the first measurement object according to the first measurement configuration set.

In some embodiments, the configuration information is used to configure the terminal device to operate using the second receiver, and the terminal device determines the RRM measurement configuration to be the second measurement configuration set. Alternatively, the configuration information is used to configure the terminal device to operate using the second receiver and to configure the second measurement configuration set, and the terminal device determines the RRM measurement configuration to be the first measurement configuration set. Optionally, the terminal device performs the RRM measurement according to the second measurement configuration set. Optionally, the terminal device performs the RRM measurement via the second receiver according to the second measurement configuration set. Optionally, the terminal device activates a Pre-MG related to the second measurement object according to the second measurement configuration set. Optionally, the terminal device deactivates a Pre-MG unrelated to the second measurement object according to the second measurement configuration set.

In some embodiments, the configuration information is used to indicate that the network device supports transmitting a wake up signal, that is, the configuration information is used to indicate that the network device has the capability to transmit a wake up signal, and the terminal device determines the RRM measurement configuration to be the first measurement configuration set. Alternatively, the configuration information is used to indicate that the network device supports transmitting a wake up signal and to configure the first measurement configuration set, and the terminal device determines the RRM measurement configuration to be the first measurement configuration set. Optionally, the terminal device performs the RRM measurement according to the first measurement configuration set. Optionally, the terminal device performs the RRM measurement via the first receiver according to the first measurement configuration set. Optionally, the terminal device activates a Pre-MG related to the first measurement object according to the first measurement configuration set. Optionally, the terminal device deactivates a Pre-MG unrelated to the first measurement object according to the first measurement configuration set.

In some embodiments, if the configuration information is used to indicate that the network device supports transmitting a wake up signal and to configure the terminal device to operate using the first receiver, the terminal device determines the RRM measurement configuration to be the first measurement configuration set. Alternatively, if the configuration information is used to indicate that the network device supports transmitting a wake up signal, the configuration information is used to configure the first measurement configuration set, and the configuration information is used to configure the terminal device to operate using the first receiver, the terminal device determines the RRM measurement configuration to be the first measurement configuration set.

In some embodiments, the configuration information is used to indicate that the network device supports transmitting a first measurement signal, that is, the configuration information is used to indicate that the network device has the capability to transmit the first measurement signal, and the terminal device determines the RRM measurement configuration to be the first measurement configuration set. Alternatively, the configuration information is used to indicate that the network device supports transmitting a first measurement signal and the configuration information is used to configure the first measurement configuration set, and the terminal device determines the RRM measurement configuration to be the first measurement configuration set. Optionally, the terminal device performs the RRM measurement according to the first measurement configuration set. Optionally, the terminal device performs the RRM measurement via the first receiver according to the first measurement configuration set. Optionally, the terminal device activates a Pre-MG related to the first measurement object according to the first measurement configuration set. Optionally, the terminal device deactivates a Pre-MG unrelated to the first measurement object according to the first measurement configuration set.

In some embodiments, if the configuration information is used to indicate that the network device supports transmitting a first measurement signal and the configuration information is used to configure the terminal device to operate using the first receiver, the terminal device determines the RRM measurement configuration to be the first measurement configuration set. Alternatively, if the configuration information is used to indicate that the network device supports transmitting a first measurement signal, the configuration information is used to configure the first measurement configuration set, and the configuration information is used to configure the terminal device to operate using the first receiver, the terminal device determines the RRM measurement configuration to be the first measurement configuration set.

In some embodiments, the configuration information is transmitted via system information, or via RRC signaling, or via a media access control (MAC) control element (CE).

In some embodiments, the first measurement configuration set is configured via system information. Exemplarily, the first measurement configuration set is configured via a system information block (SIB).

In some embodiments, the second measurement configuration set is configured via system information. Exemplarily, the second measurement configuration set is configured via an SIB.

Optionally, the first measurement configuration set and the second measurement configuration set are configured via the same SIB, or the first measurement configuration set and the second measurement configuration set are configured via different SIBs.

In some embodiments, the first measurement configuration set is configured via RRC signaling.

In some embodiments, the second measurement configuration set is configured via RRC signaling.

Optionally, the first measurement configuration set and the second measurement configuration set are configured via the same RRC signaling, or the first measurement configuration set and the second measurement configuration set are configured via different RRC signaling.

In summary, the method provided in the embodiments of the present application supports the terminal device in determining the RRM measurement configuration according to the configuration information, and switching the RRM measurement configuration in a timely and accurate manner, so that the terminal device may perform the RRM measurement in accordance with the expectation or capability of the network side. Furthermore, compared with performing the RRM measurement using the RRM measurement configuration in the second measurement configuration set, the power consumption required by the terminal device is significantly reduced when performing RRM measurements using the RRM measurement configuration in the first measurement configuration set, which helps to achieve power saving of the terminal device.

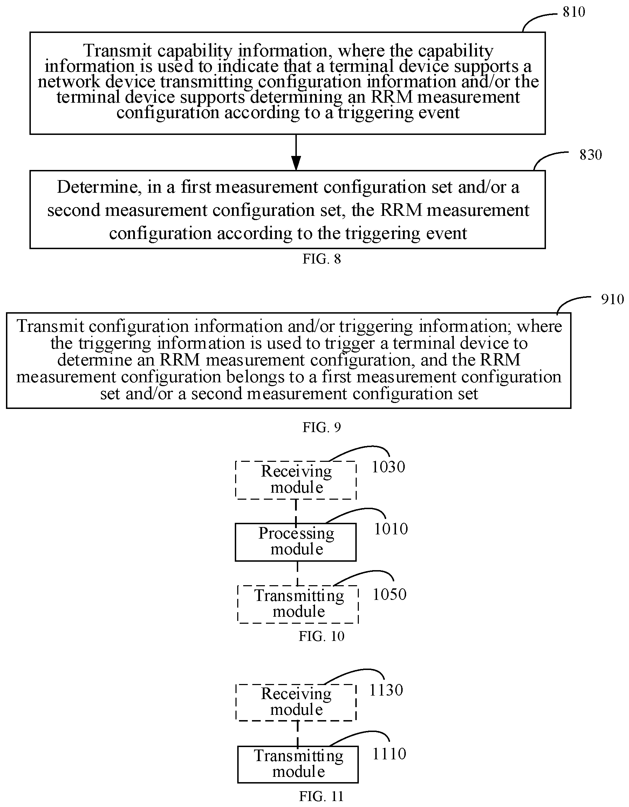

In some embodiments, step 610 may be implemented as step 830, as illustrated in FIG. 8. Optionally, the method for determining the measurement configuration illustrated in FIG. 8 may further include step 810.

FIG. 8 illustrates a flowchart of a method for determining a measurement configuration provided in an exemplary embodiment of the present application. The method is performed by a terminal device and the method includes the following steps.

**In step 810,** capability information is transmitted, where the capability information is used to indicate that the terminal device supports a network device transmitting configuration information and/or that the terminal device supports determining an RRM measurement configuration according to a triggering event.

It may also be understood as, the capability information reported by the terminal device is used to indicate a first capability (Capability 1) and/or a second capability (Capability 2), where the first capability indicates that the terminal device supports a network device transmitting the configuration information, and the second capability indicates that the terminal device supports determining the RRM measurement configuration according to the triggering event.

Here, the first capability may also be understood as: the terminal device supporting the network device in indicating a switch of the RRM measurement configuration. The second capability may also be understood as: the terminal device supporting autonomous determination of the RRM measurement configuration.

It should be noted that step 810 is an optional step. Furthermore, the network device may transmit the configuration information and/or triggering information with reference to the capability information, or may transmit the configuration information and/or triggering information without reference to the capability information. Exemplarily, even if the terminal device transmits the capability information, the network device may not consider the capability information reported by the terminal device when transmitting the configuration information and/or triggering the terminal device to determine the RRM measurement configuration.

In some embodiments, if the capability information of the terminal device is used to indicate the first capability, the network device transmits configuration information to the terminal device, so that the terminal device may determine the RRM measurement configuration according to the configuration information.

In some embodiments, regardless of whether the terminal device reports the capability information or what type of the capability information is reported, as long as the network device transmits the configuration information to the terminal device, the terminal device determines the RRM measurement configuration according to the configuration information.

In some embodiments, if the capability information of the terminal device is used to indicate the second capability, the network device transmits the triggering information to the terminal device, so that the terminal device may determine the RRM measurement configuration according to a first type of triggering event.

In some embodiments, if the capability information of the terminal device is used to indicate the second capability, the network device does not transmit the configuration information to the terminal device.

**In step 830,** in the first measurement configuration set and/or the second measurement configuration set, the RRM measurement configuration is determined according to the triggering event.

Determining the RRM measurement configuration according to the triggering event can also be understood as switching the RRM measurement configuration as triggered by an event. Since the network side does not need to directly indicate the switch of the RRM measurement configuration, determining the RRM measurement configuration according to the triggering event may also be considered as the terminal device autonomously determining the RRM measurement configuration.

In some embodiments, the triggering event includes a first type of triggering event and/or a second type of triggering event, where the first type of triggering event is triggered by the triggering information, and the second type of triggering event is triggered by a triggering condition.

First, the content related to the terminal device determining the RRM measurement configuration according to the first type of triggering event is introduced.

Here, the triggering information is related to at least one of: a switch of a BWP, a bandwidth change of a wake up signal, a change of a measurement object, activation of a wake up signal, deactivation of a wake up signal, activation of a secondary cell, deactivation of a secondary cell, or an indication for reducing power consumption.

Optionally, the triggering information is transmitted by a network device. Optionally, the triggering information is transmitted via at least one of: a system message, a broadcast message, downlink control information (DCI), a MAC CE, or RRC signaling.

In some embodiments, the first type of triggering event includes an active BWP switching from a first BWP to a second BWP. If an MO is located within the second BWP and not within the first BWP, the terminal device deactivates the Pre-MG associated with the MO. If the MO is located within the first BWP and not within the second BWP, the terminal device activates the Pre-MG associated with the MO.

In some embodiments, a terminal device receives the triggering information, and the triggering information is used to indicate the active BWP switching from the first BWP to the second BWP. Accordingly, the terminal device determines the RRM measurement configuration according to the first type of triggering event.

In some embodiments, the switching of the BWP is indicated by the network device. Exemplarily, the network device transmits DCI to indicate that the terminal device is to switch from the first BWP to the second BWP. Exemplarily, the network device transmits RRC signaling or RRC reconfiguration signaling to trigger the terminal device to switch from the first BWP to the second BWP.

In some embodiments, the first type of triggering event includes a bandwidth of a wake up signal switching from a first bandwidth to a second bandwidth. If an MO is located within the second bandwidth and not within the first bandwidth, the terminal device deactivates the Pre-MG associated with the MO, and/or determines that the measurement manner of the MO does not require a measurement gap, and/or determines that the measurement of the MO does not require an interruption. If the MO is located within the first bandwidth and not within the second bandwidth, the terminal device activates the Pre-MG associated with the MO, and/or determines that the measurement of the MO requires an interruption.

In some embodiments, the terminal device receives the triggering information, and the triggering information is used to indicate the bandwidth of the wake up signal switching from the first bandwidth to the second bandwidth. Accordingly, the terminal device determines the RRM measurement configuration according to the first type of triggering event.

In some embodiments, the bandwidth of the wake up signal is indicated by the network device. Exemplarily, the network device transmits DCI to indicate that the terminal device is to switch the bandwidth of the wake up signal from the first bandwidth to the second bandwidth.

It can be understood that the bandwidth switching of the wake up signal may affect the behavior of the terminal device when performing the RRM measurement, such as whether to perform radio frequency (RF) tuning, whether the measurement requires a measurement gap, whether to activate/deactivate Pre-MG, etc.

Exemplarily, the width of the first bandwidth is 5 MHz, the width of the second bandwidth is 20 MHz, and the first bandwidth belongs to the second bandwidth. After receiving an indication from the network device to switch the bandwidth of the wake up signal from the first bandwidth to the second bandwidth, the terminal device autonomously adjusts the operating bandwidth of a first receiver. When measuring signals of a serving cell and/or a neighbor cell, the measurement of measurement signals located outside the first bandwidth and within the second bandwidth may be performed without requiring a measurement gap or an interruption, and the Pre-MG related to the measurement signals located outside the first bandwidth and within the second bandwidth may be deactivated.

In some embodiments, the first type of triggering event includes a bandwidth of a first measurement signal switching from a first bandwidth to a second bandwidth. If an MO is located within the second bandwidth and not within the first bandwidth, the terminal device deactivates the Pre-MG associated with the MO, and/or determines that the measurement manner of the MO does not require a measurement gap, and/or determines that the measurement of the MO does not require an interruption. If the MO is located within the first bandwidth and not within the second bandwidth, the terminal device activates the Pre-MG associated with the MO, and/or determines that the measurement of the MO requires an interruption.

In some embodiments, the terminal device receives triggering information, and the triggering information is used to indicate the bandwidth of the first measurement signal switching from the first bandwidth to the second bandwidth. Accordingly, the terminal device determines the RRM measurement configuration according to the first type of triggering event.

In some embodiments, the bandwidth of the first measurement signal is indicated by the network device. Exemplarily, the network device transmits DCI to indicate that the terminal device is to switch the bandwidth of the first measurement signal from the first bandwidth to the second bandwidth.

In some embodiments, the first type of triggering event includes a change in measurement objects, such as a change in MO identities included in a measurement object list, or a change in the measurement object list used by the terminal device. Optionally, the measurement object list is an MO list or a MeasObjectToAddModList.

In some embodiments, the terminal device receives triggering information, and the triggering information is used to at least one of: configure the measurement object, modify the measurement object, reconfigure the measurement object, or delete the measurement object. Accordingly, the terminal device determines the RRM measurement configuration according to the first type of triggering event.

If a measurement object list removes a first MO identity, the terminal device determines that the MO corresponding to the first MO identity no longer needs to be measured, and the terminal device may deactivate the Pre-MG associated with the first MO identity. If the measurement object list adds a second MO identity, the terminal device determines that the MO corresponding to the second MO identity needs to be measured, and the terminal device may activate the Pre-MG associated with the second MO identity.

If the measurement object list used by the terminal device switches from a first measurement object list to a second measurement object list, the terminal device determines that MOs belonging to the first measurement object list no longer need to be measured, and the terminal device may deactivate the Pre-MGs associated with the measurement objects within the first measurement object list. If there are some identities that belong to both the first measurement object list and the second measurement object list, the terminal device does not deactivate the Pre-MGs associated with these identities.

If the measurement object list used by the terminal device switches from the first measurement object list to the second measurement object list, the terminal device determines that belonging to the second list of measurement objects need to be measured, and the terminal device may activate the Pre-MGs associated with the measurement objects within the second measurement object list.

In some embodiments, the change of the measurement object is indicated by the network device. Exemplarily, the network device configures the measurement object via RRC signaling, and/or the network device reconfigures the measurement object via RRC reconfiguration signaling.

In some embodiments, the first type of triggering event includes a change in the activation state of the wake up signal, such as the wake up signal changing from an activated state to a deactivated state, or the wake up signal changing from a deactivated state to an activated state.

In some embodiments, the terminal device receives triggering information, and the triggering information is used to activate or deactivate the wake up signal. Accordingly, the terminal device determines the RRM measurement configuration according to the first type of triggering event.

In some embodiments, if the wake up signal changes from the deactivated state to the activated state, the terminal device determines the RRM measurement configuration to be the first measurement configuration set.

In some embodiments, if the wake up signal changes from the deactivated state to the activated state, the terminal device determines the type of measurement signal to be an LP-SS. Exemplarily, the terminal device switches the type of measurement signal from the SSB and/or CSI-RS to the LP-SS.

In some embodiments, if the wake up signal changes from the deactivated state to the activated state, the terminal device increases a measurement timing configuration period, and/or increases a measurement gap period, and/or reduces the number of measurement signals, and/or determines the measurement gap as a network control small gap (NCSG).

Exemplarily, when the wake up signal changes from the deactivated state to the activated state, the reception of the wake up signal and the reception of the first measurement signal may conflict in a time domain. In this case, the terminal device increases the measurement timing configuration period corresponding to the first measurement signal, and/or increases the measurement gap period, and/or determines the measurement gap as the NCSG, so that the measurement window of the first measurement signal avoids the reception time of the WUS as much as possible, thereby avoiding a reception conflict between the wake up signal and the first measurement signal to the greatest extent.

Exemplarily, when the wake up signal changes from the deactivated state to the activated state, the reception of the wake up signal may replace part of the measurement functions. In this case, the terminal device reduces the number of measurement signals and reduces the reception occasions for some measurement signals to save power consumption. Exemplarily, the terminal device changes the cells to be measured from all neighbor cells in a configured neighbor cell list to a portion of the neighbor cells in the neighbor cell list, thereby reducing the number of measurement signals to be measured. Optionally, the portion of neighbor cells is the first N neighbor cells in the neighbor cell list; optionally, the portion of neighbor cells is the last N neighbor cells in the neighbor cell list; optionally, the portion of neighbor cells is N randomly selected neighbor cells from the neighbor cell list.

In some embodiments, if the wake up signal changes from the activated state to the deactivated state, the terminal device determines the RRM measurement configuration to be the second measurement configuration set.

In some embodiments, if the wake up signal changes from the activated state to the deactivated state, the terminal device determines that the type of measurement signal is an SSB and/or CSI-RS. Exemplarily, the terminal device switches the type of measurement signal from the LP-SS to the SSB and/or CSI-RS.

In some embodiments, if the wake up signal changes from the activated state to the deactivated state, the terminal device decreases the measurement timing configuration period, and/or decreases the measurement gap period, and/or increases the number of measurement signals.

In some embodiments, the wake up signal and the first measurement signal correspond to the same bandwidth, which may also be understood as the transmission of the wake up signal and the first measurement signal occurring within the same bandwidth. Such a design enables the terminal device, when measuring neighbor cell signals, to use only an idle radio frequency channel and create some interruptions or gaps on both sides of an NCSG, thereby achieving both the measurement of the first measurement signal and the reception of the wake up signal.

In some embodiments, the first type of triggering event includes a secondary cell transitioning from a deactivated state to an activated state. If an MO is located within an active BWP of the secondary cell, the terminal device deactivates the Pre-MG associated with the MO. If an MO is located outside the active BWP of the secondary cell, the terminal device activates the Pre-MG associated with the MO.

In some embodiments, the first type of triggering event includes a secondary cell transitioning from an activated state to a deactivated state. If an MO is located within an active BWP of the secondary cell, the terminal device activates the Pre-MG associated with the MO.

In some embodiments, the terminal device receives triggering information, the triggering information is used to activate or deactivate the secondary cell. Accordingly, the terminal device determines the RRM measurement configuration according to the first type of triggering event.

In some embodiments, the activation or deactivation of the secondary cell is indicated by the network device via a MAC CE.

In some embodiments, if the first type of triggering event includes receiving indication information for reducing power consumption, the terminal device determines the RRM measurement configuration to be the first measurement configuration set, and/or increases the measurement timing configuration period, and/or increases the measurement gap period, and/or reduces the number of measurement signals, and/or determines the measurement gap as an NCSG. Optionally, the terminal device performs the RRM measurement via a first receiver according to the first measurement configuration set. Here, the triggering information of the first type of triggering event includes the indication information for reducing power consumption.

Optionally, the indication for reducing power consumption comes from the network device.

In some embodiments, determining the RRM measurement configuration according to the first type of triggering event includes determining the RRM measurement configuration according to triggering information. The triggering information is used to at least one of: indicate an active BWP switching from a first BWP to a second BWP; indicate a bandwidth of a wake up signal switching from a first bandwidth to a second bandwidth; indicate removing a first MO identity from a measurement object list; indicate adding a second MO identity to a measurement object list; indicate a measurement object list switching from a first measurement object list to a second measurement object list; indicate to activate a wake up signal; indicate to deactivate a wake up signal; indicate to activate a secondary cell; indicate to deactivate a secondary cell; or indicate the terminal device to reduce power consumption.

In some embodiments, the terminal device receives the triggering information. The triggering information includes at least one of: triggering information indicating the wake up signal transitioning from an activated state to a deactivated state; triggering information indicating a reduction in power consumption; triggering information indicating an active BWP switching from a first BWP to a second BWP; triggering information indicating a bandwidth of a wake up signal switching from a first bandwidth to a second bandwidth; triggering information indicating removing a first MO identity from a measurement object list; triggering information indicating adding a second MO identity to a measurement object list; triggering information indicating switching from a first measurement object list to a second measurement object list; triggering information indicating a secondary cell transitioning from a deactivated state to an activated state; or triggering information indicating a secondary cell transitioning from an activated state to a deactivated state.

Next, content related to the terminal device determining the RRM measurement configuration according to a second type of triggering event is introduced.

The triggering condition includes at least one of: a channel measurement result reaching a first threshold, the hardware temperature of the UE reaching a second threshold, the battery level of the UE reaching a third threshold, a first timer expiring, or a power saving mode being turned on. Here, a first timer is used for timing of BWP switching.

Optionally, the triggering condition is agreed upon by a communication protocol, pre-configured by the network device, autonomously determined by the terminal device, or determined through negotiation between the network device and the terminal device.

In some embodiments, the first threshold is agreed upon by the communication protocol, pre-configured by the network device, autonomously determined by the terminal device, or determined through negotiation between the network device and the terminal device. The second threshold is defined by the communication protocol, pre-configured by the network device, autonomously determined by the terminal device, or determined through negotiation between the network device and the terminal device. The third threshold is agreed upon by the communication protocol, pre-configured by the network device, autonomously determined by the terminal device, or determined through negotiation between the network device and the terminal device. The first timer is agreed upon by the communication protocol, pre-configured by the network device, autonomously determined by the terminal device, or determined through negotiation between the network device and the terminal device.

In some embodiments, if the second type of triggering event includes a signal measurement result reaching a first threshold, the terminal device determines the RRM measurement configuration to be the first measurement configuration set, and/or increases the measurement timing configuration period, and/or increases the measurement gap period, and/or reduces the number of measurement signals, and/or determines the measurement gap as an NCSG. Optionally, the terminal device performs the RRM measurement via a first receiver according to the first measurement configuration set. Here, the triggering condition of the second type of triggering event includes: the signal measurement result reaching the first threshold.

In some embodiments, the signal measurement result is represented by at least one of: a reference signal receiving power (RSRP) value, a reference signal strength indicator (RSSI) value, a reference signal receiving quality (RSRQ) value, a signal to interference plus noise ratio (SINR) value, a cross link interference (CLI) value, or a channel state information (CSI) value.

In some embodiments, if the second type of triggering event includes a hardware temperature of a UE reaching a second threshold, the terminal device determines the RRM measurement configuration to be the first measurement configuration set, and/or increases the measurement timing configuration period, and/or increases the measurement gap period, and/or reduces the number of measurement signals, and/or determines the measurement gap as an NCSG. Optionally, the terminal device performs the RRM measurement via a first receiver according to the first measurement configuration set. Here, the triggering condition of the second type of triggering event includes: the hardware temperature of the UE reaching the second threshold.

Exemplarily, when the hardware temperature of the UE exceeds the second threshold, it indicates that the UE is overheating. The number of measurements should be reduced, the measurement period should be increased, and a first receiver with lower power consumption should be used to perform the RRM measurement according to the first measurement configuration set, in order to reduce the power consumption of the UE and prevent a further increase in the hardware temperature of the UE.

In some embodiments, if the second type of triggering event includes the battery level of the UE reaching a third threshold, the terminal device determines the RRM measurement configuration to be a first measurement configuration set, and/or increases the measurement timing configuration period, and/or increases the measurement gap period, and/or reduces the number of measurement signals, and/or determines the measurement gap as an NCSG. Optionally, the terminal device performs the RRM measurement via a first receiver according to the first measurement configuration set.

Exemplarily, when the battery level of a UE is below a third threshold, it indicates that the battery level of the UE is too low. The number of measurements should be reduced, the measurement period should be increased, and a first receiver with lower power consumption should be used to perform the RRM measurement according to the first measurement configuration set, in order to save power and slow the rate of battery consumption.

In some embodiments, the second type of triggering event includes an active BWP switching from a first BWP to a second BWP. If an MO is located within the second BWP and not within the first BWP, the terminal device deactivates the Pre-MG associated with the MO. If the MO is located within the first BWP and not within the second BWP, the terminal device activates the Pre-MG associated with the MO. Here, the triggering condition includes expiration of a first timer.

In some embodiments, the switching of the BWP is performed according to the first timer. Exemplarily, after the first timer expires, the UE autonomously switches the BWP. Exemplarily, the first timer includes bwp-InactivityTimer.

In some embodiments, the second type of triggering event includes the terminal device autonomously turning on an energy saving mode (also referred to as a power saving mode). The terminal device determines the RRM measurement configuration to be the first measurement configuration set, and/or increases the measurement timing configuration period, and/or increases the measurement gap period, and/or reduces the number of measurement signals, and/or determines the measurement gap as an NCSG. Optionally, the terminal device performs the RRM measurement via a first receiver according to the first measurement configuration set. Here, the triggering condition includes turning on the energy saving mode/power saving mode.

In some embodiments, the first type of triggering event and the second type of triggering event may be implemented individually or in any combination. For example, when the terminal device determines the RRM measurement configuration according to the triggering event, the terminal device may refer to both the triggering information and the triggering condition.

In some embodiments, the first measurement configuration set is configured via system information. Exemplarily, the first measurement configuration set is configured via an SIB.

In some embodiments, the second measurement configuration set is configured via system information. Exemplarily, the second measurement configuration set is configured via an SIB.

Optionally, the first measurement configuration set and the second measurement configuration set are configured via the same SIB, or the first measurement configuration set and the second measurement configuration set are configured via different SIBs.

In some embodiments, the first measurement configuration set is configured via RRC signaling.

In some embodiments, the second measurement configuration set is configured via RRC signaling.

Optionally, the first measurement configuration set and the second measurement configuration set are configured via the same RRC signaling, or the first measurement configuration set and the second measurement configuration set are configured via different RRC signaling.

In summary, the method provided in the embodiments of the present application supports the terminal device in autonomously determining the RRM measurement configuration according to the triggering event, so as to switch the RRM measurement configuration in a timely and accurate manner, enabling the terminal device to perform the RRM measurement in accordance with the current communication environment and its own status, and avoiding conflicts between the RRM measurement and other services. If the triggering event is a first type of triggering event, the terminal device determines the RRM measurement configuration according to received triggering information, enabling the terminal device to perform the RRM measurement in accordance with the expectation or instruction of the network side. If the triggering event is a second type of triggering event, the terminal device autonomously determines the RRM measurement configuration according to the triggering condition, achieving more flexible and timely determination of the RRM measurement configuration, and also saving signaling consumption within the system, eliminating the resource consumption of the network device for transmitting the configuration information and triggering information. Furthermore, compared with performing the RRM measurement using the RRM measurement configuration in the second measurement configuration set, the power consumption required by the terminal device is significantly reduced when performing the RRM measurement using the RRM measurement configuration in the first measurement configuration set, which helps to achieve power saving of the terminal device.

It should be noted that the embodiment illustrated in FIG. 7 and the embodiment illustrated in FIG. 8 may be implemented individually or in combination. For example, when determining the RRM measurement configuration, the terminal device considers both the configuration information transmitted by the network device and the triggering event. For example, after receiving the configuration information transmitted by the network device, the terminal device switches the RRM measurement configuration when the triggering event occurs.

FIG. 9 illustrates a flowchart of a method for determining a measurement configuration provided in an exemplary embodiment of the present application. The method is performed by a network device and the method includes the following step.

**In step 910,** configuration information and/or triggering information is transmitted, where the triggering information is used to trigger a terminal device to determine an RRM measurement configuration according to a first type of triggering event. The RRM measurement configuration belongs to a first measurement configuration set and/or a second measurement configuration set. The first measurement configuration set is used for a first receiver of the terminal device to perform an RRM measurement, and the second measurement configuration set is used for a second receiver of the terminal device to perform the RRM measurement.

In some embodiments, the first receiver is an LP-WUR or a WUR, and the second receiver is a main receiver.

In some embodiments, the transmitted configuration information is used to configure the RRM measurement configuration for the terminal device, and/or the transmitted configuration information is used to configure the receiver operating mode of the terminal device.

In some embodiments, the configuration information is used to configure the first measurement configuration set for the terminal device, and/or the configuration information is used to configure the terminal device to operate using a first receiver, and/or the configuration information is used to indicate that the network device supports transmitting a wake up signal, and/or the configuration information is used to indicate that the network device supports transmitting a first measurement signal.

In some embodiments, the configuration information is used to configure the second measurement configuration set, and/or the configuration information is used to configure the terminal device to operate using the second receiver.

In some embodiments, the configuration information is transmitted via system information, RRC signaling, or a MAC CE.

For content related to the configuration information, please refer to step 730, which will not be repeated here.

In some embodiments, the network device triggers the terminal device to determine the RRM measurement configuration by indicating at least one of: a switch of a BWP, a bandwidth change of a wake up signal, a change of a measurement object, activation of a wake up signal, deactivation of a wake up signal, activation of a secondary cell, deactivation of a secondary cell, or an indication for reducing power consumption.

In some embodiments, the network device indicates at least one of: a switch of a BWP, a bandwidth of a wake up signal, a bandwidth of a first measurement signal, a configuration of a measurement object, activation of a wake up signal, deactivation of a wake up signal, activation of a secondary cell, or deactivation of a secondary cell.

In some embodiments, the network device indicates the terminal device to reduce power consumption.

In some embodiments, for content related to triggering, please refer to step 830, which will not be repeated here.

In some embodiments, the network device receives capability information transmitted by the terminal device. The capability information is used to indicate that the terminal device supports the network device transmitting the configuration information and/or that the terminal device supports determining the RRM measurement configuration according to a triggering event. For content related to the capability information, please refer to step 710 and step 810, which will not be repeated here.

It should be noted that when the network device transmits the configuration information and/or the triggering information, the capability information reported by the terminal device may be referred to, or the capability information reported by the terminal device may not be referred to.

Exemplarily, when the capability information transmitted by the terminal device is used to indicate a first capability, the network device transmits the configuration information to the terminal device, so that the terminal device may determine the RRM measurement configuration according to the configuration information.

Exemplarily, when the capability information transmitted by the terminal device is used to indicate a second capability, the network device transmits the triggering information to the terminal device, so that the terminal device may determine the RRM measurement configuration according to the first type of triggering event.

Exemplarily, when the capability information transmitted by the terminal device is used to indicate the second capability, the network device does not transmit the configuration information to the terminal device.

Exemplarily, when the capability information transmitted by the terminal device is used to indicate the first capability and the second capability, the network device may transmit the configuration information and/or the triggering information. The terminal device may determine the RRM measurement configuration according to the configuration information, may also determine the RRM measurement configuration according to the triggering information, and may further determine the RRM measurement configuration according to both the configuration information and the triggering information.

Exemplarily, regardless of whether the terminal device reports the capability information or what type of the capability information is reported, the network device transmits the configuration information to the terminal device.

Exemplarily, regardless of whether the terminal device reports the capability information or what type of the capability information is reported, the network device transmits the triggering information to the terminal device.

In summary, the method provided in the embodiments of the present application supports the network device in enabling the terminal device to flexibly switch the RRM measurement configuration through the configuration information and triggering information, thereby ensuring the reliability and efficiency of the RRM measurement. Furthermore, compared with performing the RRM measurement using the RRM measurement configuration in the second measurement configuration set, the power consumption required by the terminal device is significantly reduced when performing the RRM measurement using the RRM measurement configuration in the first measurement configuration set, which helps to achieve power saving of the terminal device.

FIG. 10 illustrates a schematic block diagram of an apparatus for determining a measurement configuration provided in an exemplary embodiment of the present application. The apparatus may be implemented as the terminal device illustrated in FIG. 6, FIG. 7, or FIG. 8, or as a part of the terminal device illustrated in FIG. 6, FIG. 7, or FIG. 8. The apparatus includes a processing module 1010. Optionally, the apparatus further includes a receiving module 1030 and/or a transmitting module 1050.

The processing module 1010 is configured to determine, in a first measurement configuration set and/or a second measurement configuration set, an RRM measurement configuration according to configuration information and/or a triggering event, where the first measurement configuration set is used for a first receiver to perform an RRM measurement, and the second measurement configuration set is used for a second receiver to perform the RRM measurement.

In some embodiments, the configuration information is used to configure the RRM measurement configuration for the terminal device, and/or the configuration information is used to configure a receiver operating mode of the terminal device.

In some embodiments, the apparatus further includes the receiving module 1030, which is configured to receive the configuration information and/or triggering information.

In some embodiments, the processing module 1010 is configured to: in a case where the configuration information is used to configure the first measurement configuration set for the terminal device, and/or the configuration information is used to configure the terminal device to operate using the first receiver, and/or the configuration information is used to indicate that a network device supports transmitting a wake up signal, determine that the RRM measurement configuration includes the first measurement configuration set.

In some embodiments, the processing module 1010 is configured to: in a case where the configuration information is used to configure the second measurement configuration set for the terminal device, and/or the configuration information is used to configure the terminal device to operate using the second receiver, determine that the RRM measurement configuration includes the second measurement configuration set.

In some embodiments, the triggering event includes: a first type of triggering event and/or a second type of triggering event, where the first type of triggering event is triggered by triggering information, and the second type of triggering event is triggered by a triggering condition.

In some embodiments, the triggering information is related to at least one of: a switch of a BWP, a bandwidth change of a wake up signal, a change of a measurement object, activation of a wake up signal, deactivation of a wake up signal, activation of a secondary cell, deactivation of a secondary cell, or an indication for reducing power consumption.

In some embodiments, the processing module 1010 is configured to: in a case where the first type of triggering event includes the wake up signal transitioning from a deactivated state to an activated state, determine that the RRM measurement configuration includes the first measurement configuration set, and/or increase a measurement timing configuration period, and/or increase a measurement gap period, and/or reduce a number of measurement signals, and/or determine a measurement gap as an NCSG.

In some embodiments, the receiving module 1030 is configured to receive triggering information indicating that the wake up signal transitions from a deactivated state to an activated state.

In some embodiments, the processing module 1010 is configured to: in a case where the first type of triggering event includes the wake up signal transitioning from an activated state to a deactivated state, determine that the RRM measurement configuration includes the second measurement configuration set, and/or decrease a measurement timing configuration period, and/or decrease a measurement gap period, and/or increase a number of measurement signals.

In some embodiments, the receiving module 1030 is configured to receive triggering information indicating that the wake up signal transitions from an activated state to a deactivated state.

In some embodiments, the processing module 1010 is configured to: in a case where the first type of triggering event includes receiving indication information for reducing power consumption, determine that the RRM measurement configuration includes the first measurement configuration set, and/or increase a measurement timing configuration period, and/or increase a measurement gap period, and/or reduce a number of measurement signals, and/or determine a measurement gap as an NCSG.

In some embodiments, the receiving module 1030 is configured to receive triggering information indicating a reduction in power consumption.

In some embodiments, the processing module 1010 is configured to:
in a case where the first type of triggering event includes an active BWP switching from a first BWP to a second BWP, if a measurement object is located within the second BWP and not within the first BWP, deactivate a measurement gap associated with the measurement object; or
in a case where the triggering event includes a bandwidth of a wake up signal switching from a first bandwidth to a second bandwidth, if a measurement object is located within the second bandwidth and not within the first bandwidth, deactivate a measurement gap associated with the measurement object.

In some embodiments, the receiving module 1030 is configured to receive triggering information indicating switching of an active BWP from a first BWP to a second BWP.

In some embodiments, the receiving module 1030 is configured to receive triggering information indicating switching of a bandwidth of a wake up signal from a first bandwidth to a second bandwidth.

In some embodiments, the processing module 1010 is configured to:
in a case where the first type of triggering event includes an active BWP switching from a first BWP to a second BWP, if a measurement object is located within the first BWP and not within the second BWP, activate a measurement gap associated with the measurement object; or
in a case where the first type of triggering event includes a bandwidth of a wake up signal switching from a first bandwidth to a second bandwidth, if a measurement object is located within the first bandwidth and not within the second bandwidth, activate a measurement gap associated with the measurement object.

In some embodiments, the processing module 1010 is configured to:
in a case where the first type of triggering event includes removing a first MO identity from a measurement object list, deactivate a measurement gap associated with the first MO identity; and/or
in a case where the first type of triggering event includes adding a second MO identity to a measurement object list, activate a measurement gap associated with the second MO identity.

In some embodiments, the receiving module 1030 is configured to receive triggering information indicating removing a first MO identity from a measurement object list.

In some embodiments, the receiving module 1030 is configured to receive triggering information indicating adding a second MO identity to a measurement object list.

In some embodiments, the processing module 1010 is configured to: in a case where the first type of triggering event includes switching from a first measurement object list to a second measurement object list, deactivate a measurement gap associated with a measurement object in the first measurement object list, and/or activate a measurement gap associated with a measurement object in the second measurement object list.

In some embodiments, the receiving module 1030 is configured to receive triggering information indicating switching from a first measurement object list to a second measurement object list.

In some embodiments, the processing module 1010 is configured to:
in a case where the first type of triggering event includes a secondary cell transitioning from a deactivated state to an activated state, and a measurement object is located within an active BWP of the secondary cell, deactivate a measurement gap associated with the measurement object; or
in a case where the first type of triggering event includes a secondary cell transitioning from a deactivated state to an activated state, and a measurement object is located outside an active BWP of the secondary cell, activate a measurement gap associated with the measurement object.

In some embodiments, the receiving module 1030 is configured to receive triggering information indicating that a secondary cell transitions from a deactivated state to an activated state.

In some embodiments, the receiving module 1030 is configured to receive triggering information indicating that a secondary cell transitions from an activated state to a deactivated state.

In some embodiments, the processing module 1010 is configured to: in a case where the first type of triggering event includes a secondary cell transitioning from an activated state to a deactivated state, and a measurement object is located within an active BWP of the secondary cell, activate a measurement gap associated with the measurement object.

In some embodiments, the triggering condition is agreed upon by a communication protocol, or the triggering condition is determined by the terminal device, or the triggering condition is pre-configured by a network device.

In some embodiments, the processing module 1010 is configured to: in a case where the second type of triggering event includes a signal measurement result reaching a threshold, determine that the RRM measurement configuration includes the first measurement configuration set, and/or increase a measurement timing configuration period, and/or increase a measurement gap period, and/or reduce a number of measurement signals, and/or determine a measurement gap as an NCSG.

In some embodiments, the processing module 1010 is configured to: in a case where the second type of triggering event includes a hardware temperature of the terminal device reaching a threshold, determine that the RRM measurement configuration includes the first measurement configuration set, and/or increase a measurement timing configuration period, and/or increase a measurement gap period, and/or reduce a number of measurement signals, and/or determine a measurement gap as an NCSG.

In some embodiments, the apparatus further includes a transmitting module 1050, which is configured to transmit capability information, where the capability information is used to indicate a first capability and/or a second capability; where the first capability indicates that the terminal device supports a network device transmitting the configuration information, and the second capability indicates that the terminal device supports determining the RRM measurement configuration according to the triggering event.

In some embodiments, the processing module 1010 is configured to perform, based on the RRM measurement configuration, the RRM measurement via the first receiver or the second receiver.

In some embodiments, the processing module 1010 is configured to perform one or more of the following steps: step 610, step 730, or step 830.

In some embodiments, the transmitting module 1050 is configured to perform step 710 and/or step 810.

In summary, the apparatus provided in the embodiments of the present application supports determining the RRM measurement configuration in the first measurement configuration set and/or the second measurement configuration set when a first receiver and a second receiver are included in the apparatus. Compared with performing the RRM measurement using the RRM measurement configuration in the second measurement configuration set, the power consumption required by the terminal device is significantly reduced when performing the RRM measurement using the RRM measurement configuration in the first measurement configuration set, which helps to achieve power saving of the terminal device.

Furthermore, flexible switching the RRM measurement configuration is supported to ensure the reliability and efficiency of the RRM measurement. If the RRM measurement configuration is determined according to the configuration information, the adopted RRM measurement configuration may conform to the expectation or capability of the current network side. If the RRM measurement configuration is determined according to the triggering event, the adopted RRM measurement configuration may conform to the communication environment within the current system and the power consumption situation of the apparatus itself.

FIG. 11 illustrates a schematic block diagram of an apparatus for determining a measurement configuration provided in an exemplary embodiment of the present application. The apparatus may be implemented as the network device illustrated in FIG. 9, or as a part of the network device illustrated in FIG. 9. The apparatus includes a transmitting module 1110. Optionally, the apparatus further includes a receiving module 1130.

The transmitting module 1110 is configured to transmit configuration information and/or triggering information, where the triggering information is used to trigger a terminal device to determine an RRM measurement configuration, the terminal device has a first receiver and a second receiver, and operating power consumption of the first receiver is lower than operating power consumption of the second receiver.

In some embodiments, the configuration information is used to configure the RRM measurement configuration for the terminal device according to a first type of triggering event, and/or the configuration information is used to configure a receiver operating mode of the terminal device.

In some embodiments, the configuration information is used to at least one of: configure a first measurement configuration set for the terminal device; configure the terminal device to operate using the first receiver; indicate that the network device supports transmitting a wake up signal; configure a second measurement configuration set for the terminal device; or configure the terminal device to operate using the second receiver.

In some embodiments, the triggering information is related to at least one of: a switch of a BWP, a bandwidth change of a wake up signal, a change of a measurement object, activation of a wake up signal, deactivation of a wake up signal, activation of a secondary cell, deactivation of a secondary cell, or an indication for reducing power consumption.

In some embodiments, the triggering information is used to at least one of: indicate an active BWP switching from a first BWP to a second BWP; indicate a bandwidth of a wake up signal switching from a first bandwidth to a second bandwidth; indicate removing a first MO identity from a measurement object list; indicate adding a second MO identity to a measurement object list; indicate a measurement object list switching from a first measurement object list to a second measurement object list; indicate to activate a wake up signal; indicate to deactivate a wake up signal; indicate to activate a secondary cell; indicate to deactivate a secondary cell; or indicate the terminal device to reduce power consumption.

In some embodiments, the apparatus further includes the receiving module 1130, which is configured to receive capability information, and the capability information is used to indicate a first capability and/or a second capability, where the first capability indicates that the terminal device supports the apparatus transmitting the configuration information, and the second capability indicates that the terminal device supports determining the RRM measurement configuration according to a triggering event.

In summary, the apparatus provided in the embodiments of the present application supports enabling the terminal device to flexibly switch the RRM measurement configuration through the configuration information and triggering information, thereby ensuring the reliability and efficiency of the RRM measurement. Furthermore, compared with performing the RRM measurement using the RRM measurement configuration in the second measurement configuration set, the power consumption required by the terminal device is significantly reduced when performing the RRM measurement using the RRM measurement configuration in the first measurement configuration set, which helps to achieve power saving of the terminal device.

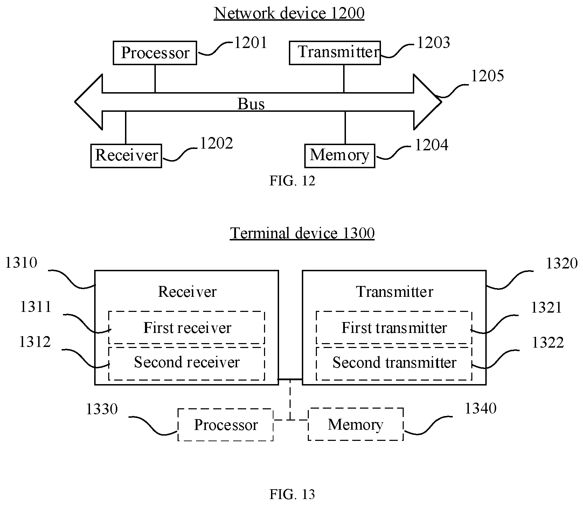

FIG. 12 illustrates a schematic structural diagram of a network device 1200 provided in an exemplary embodiment of the present application, including: a processor 1201, a receiver 1202, a transmitter 1203, a memory 1204, and a bus 1205. The communication device 1200 may be configured to perform at least some of the steps performed by the network device illustrated in FIG. 9.

The processor 1201 includes one or more processing cores, and the processor 1201 executes various functional applications and information processing by running software programs and modules.

The receiver 1202 and the transmitter 1203 may be implemented as a communication component, the communication component may be a communication chip, and the communication component may be referred to as a transceiver. In some embodiments, the receiver 1202 may be configured to implement the functions and steps of the aforementioned receiving module 1130, and the transmitter 1203 may be configured to implement the aforementioned transmitting module 1110.

The memory 1204 is connected to the processor 1201 via the bus 1205.

The memory 1204 may be configured to store at least one instruction, and the processor 1201 is configured to execute the at least one instruction to implement the various steps in the aforementioned method embodiments.

In addition, the memory 1204 may be implemented by any type of volatile or non-volatile storage device or a combination thereof, including but not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

In some embodiments, the receiver 1202 independently performs reception of signal/data, or the processor 1201 controls the receiver 1202 to perform reception of signal/data, or the processor 1201 requests the receiver 1202 to perform reception of signal/data, or the processor 1201 cooperates with the receiver 1202 to perform reception of signal/data.

In some embodiments, the transmitter 1203 independently performs transmission of signal/data, or the processor 1201 controls the transmitter 1203 to perform transmission of signal/data, or the processor 1201 requests the transmitter 1203 to perform transmission of signal/data, or the processor 1201 cooperates with the transmitter 1203 to perform transmission of signal/data.

FIG. 13 illustrates a schematic structural diagram of a terminal device 1300 provided in an exemplary embodiment of the present application, including: a receiver 1310 and a transmitter 1320. The communication device 1300 may be configured to perform at least some of the steps performed by the terminal device illustrated in FIG. 6, FIG. 7, or FIG. 8.

The receiver 1310 and the transmitter 1320 may be implemented as a communication component, the communication component may be a communication chip, and the communication component may be referred to as a transceiver.

In some embodiments, the receiver 1310 may be configured to implement the functions and steps of the aforementioned receiving module 1030. Optionally, the receiver 1310 may be implemented as a first receiver 1311 and/or a second receiver 1312.

In some embodiments, the transmitter 1320 may be configured to implement the functions and steps of the aforementioned transmitting module 1050. Optionally, the transmitter 1320 may be implemented as a first transmitter 1321 and/or a second transmitter 1322.

Optionally, the communication device 1300 may further include a processor 1330. The processor 1330 includes one or more processing cores, and the processor 1330 executes various functional applications and information processing by running software programs and modules. In some embodiments, the processor 1330 may be configured to implement the functions and steps of the aforementioned processing module 1010.

Optionally, the communication device 1300 may further include a memory 1340. The memory 1340 may be configured to store at least one instruction, and the processor 1310 is configured to execute the at least one instruction to implement the various steps in the aforementioned method embodiments. In addition, the memory 1340 may be implemented by any type of volatile or non-volatile storage device or a combination thereof, including but not limited to: a magnetic disk or an optical disc, an EEPROM, an EPROM, an SRAM, an ROM, a magnetic memory, a flash memory, or a PROM.

Optionally, the communication device 1300 may further include a bus (not illustrated in the figure). Optionally, the memory 1340 is connected to the processor 1330 via the bus.

In some embodiments, the receiver 1310 independently performs reception of signal/data, or the processor 1330 controls the receiver 1310 to perform reception of signal/data, or the processor 1330 requests the receiver 1310 to perform reception of signal/data, or the processor 1330 cooperates with the receiver 1310 to perform reception of signal/data.

In some embodiments, the transmitter 1320 performs independently performs transmission of signal/data, or the processor 1330 controls the transmitter 1320 to perform transmission of signal/data, or the processor 1330 requests the transmitter 1320 to perform transmission of signal/data, or the processor 1330 cooperates with the transmitter 1320 to perform transmission of signal/data.

In some embodiments, the first receiver 1311 is implemented as a WUR, and/or the second receiver 1312 is implemented as a main receiver.

In some embodiments, the receiver 1310 is implemented as a combined receiver of a WUR and a main receiver.

In some embodiments, the first transmitter 1321 is implemented as a main transmitter, and/or the second transmitter 1322 is implemented as a backscatter transmitter.

In some embodiments, the transmitter 1320 is implemented as a combined transmitter of a main transmitter and a backscatter transmitter.

In some embodiments, the processor 1330 and the receiver 1310 may be implemented as a single module, or the processor 1330 may be implemented as part of the receiver 1310.

In some embodiments, the processor 1330 and the transmitter 1320 may be implemented as a single module, or the processor 1330 may be implemented as part of the transmitter 1320.

In some embodiments, the communication device 1300 includes one or more processors 1330, where different processors are configured to perform the same or different steps among the aforementioned processing-related steps.

In an exemplary embodiment of the present application, a computer-readable storage medium is further provided, where the computer-readable storage medium has stored therein at least one program, and the at least one program is loaded and executed by a processor to implement the method for determining the measurement configuration provided in the various method embodiments.

In an exemplary embodiment of the present application, a chip is further provided. The chip includes a programmable logic circuit and/or program instructions, and the chip, when running on a communication device, is configured to implement the method for determining the measurement configuration provided in the aforementioned various method embodiments.

In an exemplary embodiment of the present application, a computer program product is further provided. The computer program product, when running on a processor of a computer device, enables the computer device to perform the method for determining the measurement configuration.

In an exemplary embodiment of the present application, a computer program is further provided. The computer program includes computer instructions, and a processor of a computer device executes the computer instructions, enabling the computer device to perform the method for determining the measurement configuration.

Those skilled in the art may understand that all or part of the steps of the aforementioned embodiments may be completed by hardware, or by a program instructing relevant hardware. The program may be stored in a computer-readable storage medium. The aforementioned storage medium may be a read-only memory, a magnetic disk, or an optical disk, etc.

The above descriptions are merely optional embodiments of the present application and are not intended to limit the present application. Any modifications, equivalent substitutions, and improvements made within the spirit and principles of the present application shall fall within the protection scope of the present application.

## Claims

1. A method for determining a measurement configuration, performed by a terminal device, wherein the terminal device has a first receiver and a second receiver, operating power consumption of the first receiver is lower than operating power consumption of the second receiver, and the method comprises:
determining, in a first measurement configuration set and/or a second measurement configuration set, a radio resource management (RRM) measurement configuration according to configuration information and/or a triggering event,
wherein the first measurement configuration set is used for the first receiver to perform an RRM measurement, and the second measurement configuration set is used for the second receiver to perform the RRM measurement.

2. The method according to claim 1, wherein the configuration information is used to configure the RRM measurement configuration for the terminal device, and/or the configuration information is used to configure a receiver operating mode of the terminal device.

3. The method according to claim 2, wherein determining the RRM measurement configuration according to the configuration information comprises:
in a case where the configuration information is used to configure the first measurement configuration set for the terminal device, and/or the configuration information is used to configure the terminal device to operate using the first receiver, and/or the configuration information is used to indicate that a network device supports transmitting a wake up signal, determining that the RRM measurement configuration comprises the first measurement configuration set.

4. The method according to claim 2, wherein determining the RRM measurement configuration according to the configuration information comprises:
in a case where the configuration information is used to configure the second measurement configuration set for the terminal device, and/or the configuration information is used to configure the terminal device to operate using the second receiver, determining that the RRM measurement configuration comprises the second measurement configuration set.

5. The method according to any one of claims 1 to 4, wherein the triggering event comprises: a first type of triggering event and/or a second type of triggering event, wherein the first type of triggering event is triggered by triggering information, and the second type of triggering event is triggered by a triggering condition.

6. The method according to claim 5, wherein the triggering information is related to at least one of: a switch of a bandwidth part (BWP), a bandwidth change of a wake up signal, a change of a measurement object, activation of a wake up signal, deactivation of a wake up signal, activation of a secondary cell, deactivation of a secondary cell, or an indication for reducing power consumption.

7. The method according to claim 5 or 6, wherein determining the RRM measurement configuration according to the triggering event comprises:
in a case where the first type of triggering event comprises the wake up signal transitioning from a deactivated state to an activated state, determining that the RRM measurement configuration comprises the first measurement configuration set, and/or increasing a measurement timing configuration period, and/or increasing a measurement gap period, and/or reducing a number of measurement signals, and/or determining a measurement gap as a network control small gap (NCSG).

8. The method according to claim 5 or 6, wherein determining the RRM measurement configuration according to the triggering event comprises:
in a case where the first type of triggering event comprises the wake up signal transitioning from an activated state to a deactivated state, determining that the RRM measurement configuration comprises the second measurement configuration set, and/or decreasing a measurement timing configuration period, and/or decreasing a measurement gap period, and/or increasing a number of measurement signals.

9. The method according to claim 5 or 6, wherein determining the RRM measurement configuration according to the triggering event comprises:
in a case where the first type of triggering event comprises receiving indication information for reducing power consumption, determining that the RRM measurement configuration comprises the first measurement configuration set, and/or increasing a measurement timing configuration period, and/or increasing a measurement gap period, and/or reducing a number of measurement signals, and/or determining a measurement gap as an NCSG.

10. The method according to claim 5 or 6, wherein determining the RRM measurement configuration according to the triggering event comprises:
in a case where the first type of triggering event comprises an active BWP switching from a first BWP to a second BWP, if a measurement object is located within the second BWP and not within the first BWP, deactivating a measurement gap associated with the measurement object; or
in a case where the triggering event comprises a bandwidth of a wake up signal switching from a first bandwidth to a second bandwidth, if a measurement object is located within the second bandwidth and not within the first bandwidth, deactivating a measurement gap associated with the measurement object.

11. The method according to claim 5 or 6, wherein determining the RRM measurement configuration according to the triggering event comprises:
in a case where the first type of triggering event comprises an active BWP switching from a first BWP to a second BWP, if a measurement object is located within the first BWP and not within the second BWP, activating a measurement gap associated with the measurement object; or
in a case where the first type of triggering event comprises a bandwidth of a wake up signal switching from a first bandwidth to a second bandwidth, if a measurement object is located within the first bandwidth and not within the second bandwidth, activating a measurement gap associated with the measurement object.

12. The method according to claim 5 or 6, wherein determining the RRM measurement configuration according to the triggering event comprises:
in a case where the first type of triggering event comprises removing a first measurement object (MO) identity from a measurement object list, deactivating a measurement gap associated with the first MO identity; and/or
in a case where the first type of triggering event comprises adding a second MO identity to a measurement object list, activating a measurement gap associated with the second MO identity.

13. The method according to claim 5 or 6, wherein determining the RRM measurement configuration according to the triggering event comprises:
in a case where the first type of triggering event comprises switching from a first measurement object list to a second measurement object list, deactivating a measurement gap associated with a measurement object in the first measurement object list, and/or activating a measurement gap associated with a measurement object in the second measurement object list.

14. The method according to claim 5 or 6, wherein determining the RRM measurement configuration according to the triggering event comprises:
in a case where the first type of triggering event comprises a secondary cell transitioning from a deactivated state to an activated state, and a measurement object is located within an active BWP of the secondary cell, deactivating a measurement gap associated with the measurement object; or
in a case where the first type of triggering event comprises a secondary cell transitioning from a deactivated state to an activated state, and a measurement object is located outside an active BWP of the secondary cell, activating a measurement gap associated with the measurement object.

15. The method according to claim 5 or 6, wherein determining the RRM measurement configuration according to the triggering event comprises:
in a case where the first type of triggering event comprises a secondary cell transitioning from an activated state to a deactivated state, and a measurement object is located within an active BWP of the secondary cell, activating a measurement gap associated with the measurement object.

16. The method according to claim 5, wherein the triggering condition is agreed upon by a communication protocol, or the triggering condition is determined by the terminal device, or the triggering condition is pre-configured by a network device.

17. The method according to claim 5 or 16, wherein determining the RRM measurement configuration according to the triggering event comprises:
in a case where the second type of triggering event comprises a signal measurement result reaching a threshold, determining that the RRM measurement configuration comprises the first measurement configuration set, and/or increasing a measurement timing configuration period, and/or increasing a measurement gap period, and/or reducing a number of measurement signals, and/or determining a measurement gap as an NCSG.

18. The method according to claim 5 or 16, wherein determining the RRM measurement configuration according to the triggering event comprises:
in a case where the second type of triggering event comprises a hardware temperature of the terminal device reaching a threshold, determining that the RRM measurement configuration comprises the first measurement configuration set, and/or increasing a measurement timing configuration period, and/or increasing a measurement gap period, and/or reducing a number of measurement signals, and/or determining a measurement gap as an NCSG.

19. The method according to any one of claims 1 to 18, further comprising:
transmitting capability information, wherein the capability information is used to indicate a first capability and/or a second capability,
wherein the first capability indicates that the terminal device supports a network device transmitting the configuration information, and the second capability indicates that the terminal device supports determining the RRM measurement configuration according to the triggering event.

20. The method according to any one of claims 1 to 19, further comprising:
performing, based on the RRM measurement configuration, the RRM measurement via the first receiver or the second receiver.

21. A method for determining a measurement configuration, performed by a network device and comprising:
transmitting configuration information and/or triggering information,
wherein the triggering information is used to trigger a terminal device to determine a radio resource management (RRM) measurement configuration according to a first type of triggering event, the terminal device has a first receiver and a second receiver, and operating power consumption of the first receiver is lower than operating power consumption of the second receiver.

22. The method according to claim 21, wherein the configuration information is used to configure the RRM measurement configuration for the terminal device, and/or the configuration information is used to configure a receiver operating mode of the terminal device.

23. The method according to claim 21, wherein the configuration information is used to at least one of:
configure a first measurement configuration set for the terminal device; configure the terminal device to operate using the first receiver; indicate that the network device supports transmitting a wake up signal; configure a second measurement configuration set for the terminal device; or configure the terminal device to operate using the second receiver.

24. The method according to any one of claims 21 to 23, wherein the triggering information is related to at least one of: a switch of a bandwidth part (BWP), a bandwidth change of a wake up signal, a change of a measurement object, activation of a wake up signal, deactivation of a wake up signal, activation of a secondary cell, deactivation of a secondary cell, or an indication for reducing power consumption.

25. The method according to claim 22, wherein the triggering information is used to at least one of: indicate an active BWP switching from a first BWP to a second BWP; indicate a bandwidth of a wake up signal switching from a first bandwidth to a second bandwidth; indicate removing a first measurement object (MO) identity from a measurement object list; indicate adding a second MO identity to a measurement object list; indicate a measurement object list switching from a first measurement object list to a second measurement object list; indicate to activate a wake up signal; indicate to deactivate a wake up signal; indicate to activate a secondary cell; indicate to deactivate a secondary cell; or indicate the terminal device to reduce power consumption.

26. The method according to any one of claims 21 to 25, further comprising:
receiving capability information, wherein the capability information is used to indicate a first capability and/or a second capability,
wherein the first capability indicates that the terminal device supports the network device transmitting the configuration information, and the second capability indicates that the terminal device supports determining the RRM measurement configuration according to a triggering event.

27. An apparatus for determining a measurement configuration, wherein the apparatus has a first receiver and a second receiver, operating power consumption of the first receiver is lower than operating power consumption of the second receiver, and the apparatus comprises:
a processing module, configured to determine, in a first measurement configuration set and/or a second measurement configuration set, a radio resource management (RRM) measurement configuration according to configuration information and/or a triggering event, wherein the first measurement configuration set is used for the first receiver to perform an RRM measurement, and the second measurement configuration set is used for the second receiver to perform the RRM measurement.

28. An apparatus for determining a measurement configuration, comprising:
a transmitting module, configured to transmit configuration information and/or triggering information, wherein the triggering information is used to trigger a terminal device to determine a radio resource management (RRM) measurement configuration according to a first type of triggering event, the terminal device has a first receiver and a second receiver, and operating power consumption of the first receiver is lower than operating power consumption of the second receiver.

29. A terminal device, comprising: a processor, a transceiver connected to the processor, and a memory configured to store executable instructions of the processor, wherein the processor is configured to load and execute the executable instructions to implement the method for determining the measurement configuration according to any one of claims 1 to 20.

30. A network device, comprising: a processor, a transceiver connected to the processor, and a memory configured to store executable instructions of the processor, wherein the processor is configured to load and execute the executable instructions to implement the method for determining the measurement configuration according to any one of claims 21 to 26.

31. A computer-readable storage medium, wherein the computer-readable storage medium has stored therein at least one program, and the at least one program is loaded and executed by a processor to implement the method for determining the measurement configuration according to any one of claims 1 to 20, or the method for determining the measurement configuration according to any one of claims 21 to 26.

32. A computer program product, comprising: computer instructions, wherein the computer instructions are stored in a computer-readable storage medium, a processor obtains the computer instructions from the computer-readable storage medium, and the processor executes the computer instructions to implement the method for determining the measurement configuration according to any one of claims 1 to 20, or the method for determining the measurement configuration according to any one of claims 21 to 26.
